Europäisches Patentamt

European Patent Office

Office européen des brevets

(19)

(11) Veröffentlichungsnummer: **0 460 455 B1**

## (12) EUROPÄISCHE PATENTSCHRIFT

(45) Veröffentlichungstag der Patentschrift: **21.12.94**

(51) Int. Cl.⁵: **C08F 287/00**

(21) Anmeldenummer: **91108290.7**

(22) Anmeldetag: **23.05.91**

(54) **ABS-Formmassen.**

(30) Priorität: **01.06.90 DE 4017680**
**26.09.90 DE 4030351**

(43) Veröffentlichungstag der Anmeldung:
**11.12.91 Patentblatt 91/50**

(45) Bekanntmachung des Hinweises auf die
Patenterteilung:
**21.12.94 Patentblatt 94/51**

(84) Benannte Vertragsstaaten:
**BE DE ES FR GB IT NL**

(56) Entgegenhaltungen:
**EP-A- 0 111 588**
**EP-A- 0 167 707**

(73) Patentinhaber: **BASF Aktiengesellschaft**
**Carl-Bosch-Strasse 38**
**D-67063 Ludwigshafen (DE)**

(72) Erfinder: **Baumgartner, Ehrenfried, Dr.**
**Goethestrasse 1**
**W-6701 Roedersheim-Gronau (DE)**
Erfinder: **Hofmann, Juergen**
**Muenchbuschweg 30 c**
**W-6700 Ludwigshafen (DE)**
Erfinder: **Moors, Rainer, Dr.**
**Muehlweg 27**
**W-6703 Limburgerhof (DE)**
Erfinder: **Schaech, Hansjoerg**
**Himmeroder Weg 15**
**W-6700 Ludwigshafen (DE)**
Erfinder: **Bueschl, Rainer, Dr.**
**Hollandstrasse 14**
**W-6701 Roedersheim-Gronau (DE)**
Erfinder: **Jung, Rudolf H., Dr.**
**Wachenheimer Strasse 6 d**
**W-6520 Worms 1 (DE)**

**Beschreibung**

ABS-Formmassen können wahlweise nach dem Masse-, Lösungs-, Massesuspensions- oder dem Emulsionspolymerisationsverfahren hergestellt werden (s. Winnacker-Küchler, Chemische Technologie, Band 6, Organische Technologie II, Carl Hanser Verlag, 4. Auflage, 1982, s. 384 ff.; Encyclopedia of Polymer Science and Engineering, Volume 1, John Wiley 6 Sons, New York - Chichester - Brisbane - Toronto - Singapore, S. 388 -424; Polymere Werkstoffe, Band III, Technologie 2, Herausgeber H. Batzer, Georg Thieme Verlag Stuttgart - New York, 1984, S. 9 - 23).

Die mechanischen Eigenschaften der in Masse oder Lösung polymerisierten einerseits und der in Emulsion hergestellten ABS-Formmassen andererseits sind weitgehend gleich. Der Vorteil des Masse- oder Lösungsverfahrens besteht vor allem in den niedrigeren Herstellkosten (u.a. höhere Kautschukeffektivität, kein Abwasser) und in der helleren, weniger Pigmente zur Einfärbung verbrauchenden Eigenfarbe seiner Produkte. Nachteilig ist aber im Vergleich zu dem in Emulsion hergestellten ABS ein geringerer Oberflächenglanz, was darauf zurückgeführt wird, daß in Masse oder Lösung polymerisiertes ABS deutlich größere dispergierte Kautschukpartikel besitzt.

Es hat daher eine Reihe von Versuchen gegeben, diesem Mangel durch entsprechende Verfahrensänderungen zu begegnen und ABS in Masse- und Lösungspolymerisation herzustellen, dessen dispergierte Kautschukpartikel sehr klein sind.

Kleinteiliges Lösungs-ABS mit einem guten Oberflächenglanz kann dadurch hergestellt werden, daß entweder besonders niedermolekulares Polybutadien (vgl. JA-A-63 199 177) oder Styrol-Butadien-Blockkautschuk (vgl. EP 0 054 141; JA-A-63 207 804; JA-A-63 207 803; JA-A-54 070 350) verwendet werden, oder daß spezielle Reaktionsbedingungen während oder bis zur sog. Phaseninversion eingehalten werden.

Gemeinsam ist allen auf diese Weise erzeugten Produkten, daß sie zwar einen hohen Oberflächenglanz, aber nur eine geringere Kerbschlagzähigkeit aufweisen, da die Kautschukkonzentration im Lösungs- oder Massepolymerisationsverfahren nicht beliebig erhöht werden kann. Um die Kautschukeffektivität des kleinteiligen Lösungs-ABS zu erhöhen, hat man versucht, Hartmatrixeinschlüsse (Okklusionen) in den dispergierten Kautschukpartikeln unterzubringen. Dazu wurde Polybutadien gemeinsam mit Styrol-Butadien-Blockkautschuk und Polystyrolacrylnitril in Styrol und Acrylnitril gelöst und polymerisiert (vgl. BE 888 804). Der Gelgehalt des gebildeten Pfropfkautschuks steigt durch eingeschlossenes Polystyrolacrylnitril an. Das zugesetzte Polystyrolacrylnitril verteilt sich aber aufgrund der Verträglichkeit mit der im Verfahren selbst gebildeten Matrix aus Polystyrolacrylnitril zwischen dieser Matrix und den Kautschukpartikeln, so daß für eine effektive Erhöhung der Kautschukpartikelgröße sehr viel Polystyrolacrylnitril schon vor der Polymerisation zugesetzt werden muß, was nun aber zu Viskositätsproblemen während des Polymerisationsabschnittes vor der sog. Phaseninversion führt.

Ein ähnliches Vorgehen wird in US 3 442 981 beschrieben. Anstelle von Polybutadien wird hier nur Styrol-Butadien-Blockkautschuk verwendet.

Nach dem Vorschlag des GB 1 229 917 wird Polybutadien gemeinsam mit Polystyrol in Styrol gelöst und in einer Masse-Suspensionspolymerisation zu schlagfestem Polystyrol verarbeitet. Auch hier ist eine Verteilung des vor der Polymerisation zugesetzten Polystyrols zwischen den beiden Phasen Kautschuk und Polystyrol zu erwarten. Die Erhöhung der Kautschukeffektivität dürfte nur marginal sein. Ähnliches gilt für die Ausführung des Verfahrens in ausschließlicher Suspensionspolymerisation (vgl. GB 1 243 051).

Aufgabe der Erfindung ist die Herstellung von hochglänzenden und zugleich kerbschlagzähen ABS-Formmassen im Lösungs- und Massepolymerisationsverfahren.

Erfindungsgemäß wird eine größere Effektivität hinsichtlich Bildung von Kautschukeinschlüssen erreicht, wenn ein oder mehrere Styrol-Butadien-Blockkautschuke gemeinsam mit mindestens einem weiteren Polymeren in den vorgelegten Monomeren, also Styrol und Acrylnitril und gegebenenfalls einem Lösungsmittel gelöst werden und sodann in an sich bekannter Weise polymerisiert wird.

Als "weitere Polymere" im Sinne der Erfindung sind verschiedene Arten von Polymeren zu nennen.

Ein wichtiges Polymeres ist insbesondere Polystyrol selbst.

Ein anderes, ebenso geeignetes Polymeres ist Polycyclohexyl(meth)acrylat.

Ein weiteres, die gleichen Voraussetzungen wie Polystyrol oder Polycyclohexyl(meth)acrylester erfüllendes Polymeres ist Polyphenylenether.

Darüber hinaus können Mischungen der vorgenannten Polymeren als "weitere" Polymere verwendet werden, z.B. Mischungen aus Polystyrol und Polycyclohexyl(meth)acrylat oder Polystyrol und Polyphenylenether. Eine wichtige Ausgestaltung der Erfindung besteht darin, daß anstelle eines Styrol-Butadien-Blockcopolymeren eine Mischung aus einem Styrol-Butadien-Blockcopolymeren mit Polybutadien verwendet wird.

Eine weitere, wichtige Ausgestaltung der Erfindung besteht darin, daß die Formmasse zusätzlich ein gewöhnliches Lösungs-ABS, d.h. ein in Lösungs-, Masse- oder Masse-Suspensionspolymerisation hergestelltes Pfropfcopolymerisat ("Lösungs-ABS") mit Hauptketten aus Polybutadien und Pfropfästen aus einem Copolymerisat, bestehend aus Styrol und Acrylnitril enthält, das eine durchschnittliche Kautschukpartikelgröße von 0,6 bis 10 µm besitzt und dessen Polymereinschlüsse in den Kautschukpartikeln in der chemischen Zusammensetzung mit der polymeren Matrix identisch sind.

Zur praktischen Ausgestaltung der Erfindung ist im einzelnen das folgende zu sagen:

Das vor der Polymerisation zugesetzte weitere Polymere muß mit dem Polystyrol des Styrol-Butadien-Kautschuks verträglich, d.h. ganz oder weitestgehend in diesem Polymeren löslich (vgl. A. Noshay, Block Copolymers, S. 8 bis 10, Academic Press, 1977 und O. Olabisi, Polymer-Polymer-Miscibility, 1979, S. 117 bis 189). aber unverträglich mit dem während der Polymerisation entstehenden Polystyrolacrylnitril sein. Die Menge des zugesetzten weiteren Polymeren reguliert auf diese Weise die Kautschukpartikelgröße und somit die Eigenschaften der entstehenden ABS-Formmasse. Elektronenmikroskopische Aufnahmen nach Anfärben mit $OsO_4$ und/oder $RuO_4$ zeigen neuartige Kautschukmorphologien, die sich dadurch auszeichnen, daß im Innern der Kautschukpartikel Polymeres eingeschlossen ist, das seinerseits von einer dünnen Kautschukhaut umschlossen ist.

Das während der Polymerisation entstehende Polystyrolacrylnitril ist je nach Reaktionsbedindungen mehr oder weniger stark auf den Polybutadienteil des Styrol-Butadien-Blockkautschuks aufgepfropft und führt so zu einer Anbindung an die Polystyrolacrylnitrilmatrix. Auf diese Weise können ABS-Produkte hergestellt werden, die die Vorteile der Lösungs- oder Massepolymerisation nutzen und eine günstige Kombination der Produkteigenschaften Oberflächenglanz, Kerbschlagzähigkeit und Steifigkeit aufweisen.

Zur Durchführung des Verfahrens kommen als Monomere insbesondere Styrol und Acrylnitril im Verhältnis von 90/10 bis 60/40 in Frage. Andere Monomere wie z.B. α-Methylstyrol, o-, m-, p-Methylstyrol, tert.-Butylstyrol oder Methacrylnitril bzw. (Meth)acrylsäureester können in bekannter Weise zusätzlich eingesetzt werden.

Als Kautschuk wird mindestens ein Styrol-Butadien-Blockcopolymer verwendet. In der Regel werden Zweiblockkautschuke mit einem Styrolgesamtgehalt von 3 bis 70 Gew.%, bevorzugt 10 bis 50 Gew.%, und einem Blockstyrolgehalt von 2 bis 60 Gew.%, bevorzugt 8 bis 40 Gew.% eingesetzt. Das MolmassenGewichtsmittel der Blockcopolymeren liegt zwischen 20.000 bis 600.000 g/mol. Handelsübliche geeignete Produkte sind z.B. Buna BL 6533, Buna BL 6425 und Buna BL 6578 der Bayer AG. Der Gesamtkautschukgehalt, bezogen auf die Polymermatrix, beträgt 2 bis 30 Gew.%. Eine wichtige Ausgestaltung besteht darin, daß ein Teil des Styrol-Butadien-Blockcopolymeren durch Homopolybutadien ersetzt wird; in diesem Fall sollte der Gesamt-Butadiengehalt, bezogen auf die Formmasse, 2 bis 20 Gew.% betragen und mindestens 20 % des Kautschuks ein Blockcopolymer sein.

Als Polystyrole werden zweckmäßig Produkte mit einer Molmasse (Gewichtsmittel) zwischen 10.000 und 10.000.000 g, bevorzugt 40.000 - 500.000 g eingesetzt. Das Polystyrol kann durch radikalische oder anionische Polymerisation erhalten worden sein. Es wird in einer Menge von 0,1 bis 30 Gew.%, bevorzugt 2 bis 15 Gew.%, bezogen auf die Polymermatrix verwandt.

Als Polycyclohexyl(meth)acrylat werden Produkte mit einer Molmasse (Gewichtsmittel) zwischen 10 000 und 10 000 000 g, bevorzugt 40 000 bis 500 000 g, eingesetzt. Das Polycyclohexyl(meth)acrylat wird in der Regel radikalisch polymerisiert und wird in einer Menge von 1 bis 30 Gew.%, bevorzugt 2 bis 15 Gew.%, bezogen auf die Polymermatrix verwendet.

Als Polyphenylenether wird bevorzugt Poly-2,6-dimethyl-1,4-phenylenether eingesetzt. Es können aber auch andere mit Polystyrol verträgliche und mit Polystyrolacrylnitril unverträgliche Polyphenylenether und/oder Polyphenylenethercopolymere eingesetzt werden. Solche Polyphenylenether erhält man durch oxidative Kopplung (vgl. US 3 661 848, 3 378 505, 3 306 874, 3 306 875 und 3 639 656). Geeignete Polyphenylenether weisen im allgemeinen eine Grenzviskosität von 0,1 bis 2,0, bevorzugt 0,3 bis 0,7 dl/g, gemessen in Chloroform bei 25°C auf. Der Polyphenylenether wird ebenfalls erfindungsgemäß in einer Menge von 1 bis 30 Gew.%, bezogen auf die Polymermatrix, verwendet.

Als Lösungsmittel für das erfindungsgemäße Verfahren können sowohl polare, wie unpolare Verbindungen oder Mischungen aus diesen verwendet werden. Bevorzugt verwendet werden Methylethylketon, Cyclohexanon, Toluol und besonders Ethylbenzol. Die Lösungsmittel werden in einer Menge von bis zu 30 Gew.%, bezogen auf das Reaktionsgemisch eingesetzt.

Die Polymerisation kann entweder thermisch oder durch Zusatz von Radikalinitiatoren erfolgen. Geeignete Radikalinitiatoren sind pfropfaktive Peroxide. Besonders bevorzugt sind Dibenzoylperoxid, tert.-Butylperoctoat, tert.-Butylperpivalat, tert.-Butylperneodecanoat und Bis-(tert.-butyl)-peroxalat. Die Initiatoren werden in Mengen von 0 bis 0,5 Gew.%, bezogen auf die eingesetzten Monomere, angewendet.

Als Kettenüberträger kommen die üblicherweise verwendeten Mercaptane mit 14 bis 18 C-Atomen in Betracht. Von den Mercaptanen haben sich besonders das n-Butylmercaptan, das n-octylmercaptan sowie das n- oder t-Dodecylmercaptan bewährt. Die Menge an Mercaptan beträgt, falls diese angewendet werden, in der Regel 0,005 bis 0,5 Gew.%, bezogen auf die eingesetzten Monomeren.

Die erfindungsgemäße Polymerisation wird in mindestens zwei Reaktionszonen durchgeführt. Es kann eine Reaktoranordnung aus einem oder zwei Rührkesselreaktoren mit zwei weiteren hintereinandergeschalteten Polymerisationstürmen (vgl. EP-A-0 054 141) oder eine Reaktorkaskade mit mindestens zwei hintereinandergeschalteten Polymerisationstürmen benutzt werden. Es können aber auch Anordnungen wie die in BE 888 804 beschriebene verwendet werden.

Bevorzugt wird eine Reaktorkaskade aus vier Reaktionszonen. Als Reaktionszonen werden gerührte Polymerisationstürme mit innenliegenden Kühlrohren bevorzugt.

Der Styrol-Butadien-Blockkautschuk wird gemeinsam mit dem "weiteren Polymeren" in Styrol und Acrylnitril und gegebenenfalls einem Lösungsmittel gelöst und kontinuierlich in die erste Reaktionszone gefördert. In der ersten Reaktionszone wird der Polybutadienteil des Styrol-Butadien-Blockkautschuks mit Polystyrolacrylnitril gepfropft, während in der zweiten Reaktionszone die Phaseninversion und Ausbildung der Kautschukpartikelmorphologie erfolgt. Pfropfung und Phaseninversion können auch in einer gemeinsamen Reaktionszone durchgeführt werden. In den - falls vorhanden -Reaktionszonen drei und vier erfolgt die weitere Polymerisation der Polystyrolacrylnitrilmatrix bis zu einem Feststoffgehalt von wenigstens 40 Gew.%, bevorzugt aber mindestens 65 Gew.%. Nach der letzten Reaktionszone wird die Polymerschmelze entgast und nach dem Abkühlen zu einem Strang extrudiert und granuliert.

Anstelle der kontinuierlichen Masse- oder Lösungspolymerisation können auch diskontinuierliche oder halbkontinuierliche Verfahren verwendet werden.

Ferner können auch die bisher bekannten Masse-Suspensionspolymerisationsverfahren genutzt werden, sofern die Phaseninversion vor Beginn der Suspensionspolymerisation abgeschlossen ist.

Während der Polymerisation, insbesondere nach Herstellung der Lösung des Kautschuks und des weiteren Polymeren oder vor der Verarbeitung der fertigen Polymerisate werden übliche Zusatzstoffe, wie innere Gleitmittel, Antioxidantien oder UV-Stabilisatoren, sowie Schmiermittel, Füllstoffe u. dgl. in üblichen Mengen zugesetzt.

In besonderer Ausgestaltung der Erfindung wird, wie gesagt, ein gewöhnliches Lösungs-ABS mit relativ großen Kautschukpartikeln zugemischt.

Während die Pfropfcopolymerisate der erfindungsgemäßen Formmasse eine Kautschukpartikelgröße von 0,1 bis 3,0 - bevorzugt 0,2 bis 1 $\mu$m -aufweisen sollen, hat das zugesetzte Pfropfcopolymerisat, dessen Polymereinschlüsse in den Kautschukpartikeln die gleiche Zusammensetzung wie die Hartmatrix aufweisen, eine Partikelgröße von 0,6 bis 10, bevorzugt 1 bis 5 $\mu$m.

Durch diese Ausgestaltung wird dem Bedürfnis abgeholfen, den erfindungsgemäßen ABS-Formmassen, die für sich eine besonders hohe allgemeine Zähigkeit, Steifigkeit und Oberflächenglanz aufweisen, auch eine gute Kältezähigkeit zu verleihen.

Um dies zu erreichen, werden die erfindungsgemäßen Massen zweckmäßig mit "gewöhnlichem" ABS-Polymerisat im Verhältnis 50:50 bis 95:5 gemischt. Durch gemeinsames Aufschmelzen im Extruder erhält man ein "bimodal verteiltes" ABS. Den gleichen Effekt erzielt man, wenn die Massen unmittelbar nach der jeweiligen Herstellung (also vor der sog. Entgasung) gemischt und dann gemeinsam vom Lösungmittel befreit werden.

Die erfindungsgemäßen Formmassen sind neue Stoffe oder Stoffgemische, die ein ausgewogenes Verhältnis von Oberflächenglanz, Kerbschlagzähigkeit und Steifigkeit aufweisen. Eine Abmischung von kleinteiligem und großteiligem (sog. bimodalem) ABS zum Erreichen günstiger Eigenschaftskombinationen ist nicht mehr vonnöten. Damit kann ein Konfektionierschritt (der mit einem Aufheizen der Polymeren z.T. bis auf 300 ° C verbunden ist) eingespart werden. Es ergibt sich somit, daß auch das erfindungsgemäß anzuwendende Verfahren Vorteile hat.

Die erfindungsgemäßen Formmassen haben also trotz eines größeren Kautschukpartikeldurchmessers einen sehr guten Oberflächenglanz, was damit erklärt wird, daß die Kautschukpartikel ihrerseits mit Polymeren (dem "weiteren Polymeren") gut gefüllt sind und die Kautschukhaut zwischen den Einschlüssen und der Polystyrolacrylnitrilmatrix sehr dünn ist. Dies hat vorstellungsgemäß zur Folge, daß die an der Oberfläche des Fertigteils vorhandenen Kautschukpartikel - im Gegensatz zu üblichen großen Partikeln - weniger stark schrumpfen und somit beim Abkühlen nur sehr kleine "Dellen" bilden, an denen das einfallende Licht kaum "gestreut" wird. Die voranstehende Erklärung ist allerdings rein wissenschaftlicher Art und begrenzt die Erfindung in keiner Weise.

Die nach dem erfindungsgemäßen Verfahren erhaltenen Formmassen können nach dem bekannten Verfahren der Thermoplastverarbeitung bearbeitet werden, also z.B. durch Extrudieren, Spritzgießen, Ka-

4

landrieren, Hohlkörperblasen, Pressen oder Sintern; besonders bevorzugt werden aus dem nach dem erfindungsgemäßen Verfahren hergestellten Formmasen Formteile durch Spritzgießen hergestellt.

Die in den Beispielen und Vergleichsversuchen aufgeführten Produkteigenschaften wurden wie folgt bestimmt:

- Die mittlere Teilchengröße $d_{50}$ der dispergierten Kautschukpartikel durch Auswertung elektronenmikroskopischer Aufnahmen.
- Die Kerbschlagzähigkeit an bei 230°C spritzgegossenen Formkörpern nach DIN 53 453.
- Der E-Modul, ein Maß für die Steifigkeit, an bei 230°C spritzgegossenen Formkörpern nach DIN 53 457.
- Die Viskositätszahl der Polystyrolacrylnitrilmatrix nach der Trennung von der Kautschinkphase als 0,5 %ige Lösung in Dimethylformamid.
- Die Wärmeformbeständigkeit (Vicat B) nach DIN 53 460.
- Der Oberflächenglanz wurde mit einem Dr. Lange Labor-Reflektometer nach DIN 67 530 an den Seitenflächen von spritzgegossenen Testkästchen gemessen, abweichend von DIN 67 530 unter einem Meßwinkel von 55,8° gegen einen Schwarzstandard. Die Testkästchen haben eine Lange von 11 cm, eine Breite von 4,3 cm und eine Höhe von 5 cm und wiegen ca. 26-27 g. Sie wurden jeweils unter den nachstehenden Spritzgußbedingungen A und B auf einer Arburg Allround 370 CMD-Spritzgußmaschine hergestellt.

| Bedingung A: | |
|---|---|
| Massetemperatur | 255°C |
| Werkzeugoberflächentemperatur | 60°C |
| Einspritzzeit | 0,14 sec. |
| Spritzdruck | 1200 bar |
| Staudruck | 100 bar |

| Bedingung B: | |
|---|---|
| Massetemperatur | 255°C |
| Werkzeugoberflächentemperatur | 30°C |
| Einspritzzeit | 0,4 sec. |
| Spritzdruck | 1200 bar |
| Staudruck | 100 bar |

Beispiele 1 bis 16: Verwendung von Polystyrol als weiteres Polymeres (Die Beispiele 1, 5, 13, 17, 21, 27, 31, 43, 47, 55, 59 und 101 sind Vergleichsbeispiele)

Beispiele 1 bis 4

Es wurden jeweils 11,5 Gew.-Teile (230 g) handelsüblicher Kautschuk Buna® BL 6533; Bayer AG) mit unterschiedlichen Mengen Polystyrol (VZ = 74 ml/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zingesetzt, so daß bei konstant gehaltener Reaktionstemperatur ein Polymerinmsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,10 Gew.-Teile eines handelsüblichen Stabilisators (Irganox® 1076 der Fa. Ciba-Geigy) nachdosiert. Die Rührgeschwindigkeit des Ankerrührers war in dem 6 l Stahlautoklaven auf 200 Umdrehungen pro Minute eingestellt. Nach dem Erreichen eines Feststoffgehaltes von 40 % wurde das Polymerisat mit 0,1 % Dicyumylperoxid versetzt und in einer wäßrigen Lösung von 1,8 g Na-Phosphat, 18 g eines Suspensionshilfsmittels auf Basis Ethylenoxid (Luviskol® K 90 der BASF AG) und 50 g Ertivinol in 1800 g Wasser unter Rühren (300 UPM) dispergiert. Ein vollständiger Umsatz war durch Polymerisation mit folgendem Temperaturprogramm gewährleistet:
3 Stunden bei 110°C
3 Stunden bei 130°C
4 Stunden bei 140°C

Das erhaltene Perlpolymerisat wurde mit destilliertem Wasser gründlich gewaschen und bei 80°C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 1 zusammengefaßt.

Tabelle 1

| Beispiel | Zugabe an Polystyrol [g] | E-Modul [N/mm²] | Kerbschlagzähigkeit 23°C [kJ/m²] | Kerbschlagzähigkeit -40°C [kJ/m²] | Oberflächenglanz Bed. 1 [%] | Oberflächenglanz Bed. 2 [%] | Kautschukpartikelgröße d50 [µm] |
|---|---|---|---|---|---|---|---|
| 1 | – | 2800 | 2,0 | 1,8 | 69 | 43 | 0,2 |
| 2 | 58 | 2770 | 3,2 | 2,5 | 68 | 44 | 0,3 |
| 3 | 116 | 2760 | 8,6 | 3,6 | 68 | 43 | 0,4 |
| 4 | 174 | 2760 | 7,1 | 3,4 | 67 | 41 | 0,8 |

Beispiele 5 bis 8

Es wurden jeweils 11,5 Gew.-Teile (230 g) Buna BL 6425 (Bayer AG) mit unterschiedlichen Mengen Polystyrol (VZ = 74 ml/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l Stahlautoklaven auf 200 Umdrehungen pro Minute eingestellt. Nach dem Erreichen eines Feststoffgehaltes von 40 % wurde das Polymerisat mit 0,1 % Dicyumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 UPM) dispergiert. Ein vollständiger Umsatz war durch Polymerisation mit folgendem Temperaturprogramm gewährleistet:

3 Stunden bei 110°C

3 Stunden bei 130°C

4 Stunden bei 140°C

Das erhaltene Perlpolymerisat wurde mit destilliertem Wasser gründlich gewaschen und bei 80°C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 2 zusammengefaßt.

Tabelle 2

| Beispiel | Zugabe an Polystyrol [g] | E-Modul [N/mm²] | Kerbschlagzähigkeit 23°C [kJ/m²] | Kerbschlagzähigkeit -40°C [kJ/m²] | Oberflächenglanz Bed. 1 [%] | Bed. 2 [%] | Kautschukpartikelgröße $d_{50}$ [µm] |
|---|---|---|---|---|---|---|---|
| 5 | - | 2800 | 2,7 | 1,7 | 68 | 43 | 0,2 |
| 6 | 58 | 2750 | 3,3 | 2,5 | 70 | 42 | 0,3 |
| 7 | 116 | 2770 | 9,0 | 3,6 | 69 | 43 | 0,4 |
| 8 | 174 | 2780 | 7,3 | 3,0 | 68 | 43 | 0,7 |

Beispiele 9 bis 10

Es wurden jeweils 11,5 Gew.-Teile (230 g) Blockkautschuk (Beispiel 9 Buna BL 6533; Beispiel 10 Buna BL 6425 der Bayer AG) mit jeweils 116 g Polystyrol (VZ = 74 ml/g) in 1236 g Styrol und 412 g Acrylnitril über Nacht gelöst. Zu der Lösung wurden 4,0 g tert.-Dodecylmercaptan und 2,0 g Irganox 1076 addiert.

8

Nach Aufheizen auf 80°C wurden 1,34 g tert.-Butylperpivalat zugesetzt, so daß bei konstant gehaltener Reaktionstemperatur ein Polymerumsatz von ca. 12 %/Stunde erzielt wurde. Die Rührgeschwindigkeit des Ankerrührers war in dem 6 l Stahlautoklaven auf 200 Umdrehungen pro Minute eingestellt. Nach dem Erreichen eines Feststoffgehaltes von 40 Gew.% wurde der Polymersirup mit 0,1 % Dicumylperoxid versetzt und in einer wäßrigen Lösung von 1,8 g Na-Phosphat, 18 g eines Suspensionshilfsmittels auf Basis Ethylenoxid (Luviskol® K 90 der BASF AG) und 50 g Ertivinol in 1800 g Wasser unter Rühren (300 UPM) dispergiert. Ein vollständiger Umsatz war durch Polymerisation mit folgendem Temperaturprogramm gewährleistet:

3 Stunden bei 110°C

3 Stunden bei 130°C

4 Stunden bei 140°C

Das erhaltene Perlpolymerisat wurde mit destilliertem Wasser gründlich gewaschen und bei 80°C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 3 zusammengefaßt.

Tabelle 3

| Beispiel | Kautschuk | E-Modul [N/mm$^2$] | Kerbschlagzähigkeit | | Oberflächenglanz | | Kautschukpartikelgröße d$_{50}$ [$\mu$m] |
|---|---|---|---|---|---|---|---|
| | | | 23°C [kJ/m$^2$] | -40°C [kJ/m$^2$] | Bed. 1 [%] | Bed. 2 [%] | |
| 9 | Buna BL 6533 | 2650 | 10,2 | 4,5 | 65 | 40 | 0,7 |
| 10 | Buna BL 6425 | 2600 | 10,4 | 4,8 | 64 | 41 | 0,8 |

Beispiele 11 bis 12

Es wurden jeweils 11,5 Gew.-Teile (230 g) Blockkautschuk (Beispiel 11 Buna BL 6533; Beispiel 12 Buna BL 6425 der Bayer AG) mit jeweils 116 g Polystyrol (VZ = 74 ml/g) in 1236 g Styrol und 412 g Acrylnitril über Nacht gelöst. Zu der Lösung wurden 4,0 g tert.-Dodecylmercaptan und 2,0 g Irganox 1076 addiert. Danach wurde unter Rühren (200 UPM) thermisch bei 118°C polymerisiert bis ein Feststoffgehalt von 40 % erreicht war. Der Polymersirup wurde danach mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 UPM) dispergiert. Ein vollständiger Umsatz war durch Polymerisation mit folgendem Temperaturprogramm gewährleistet:

3 Stunden bei 110°C
3 Stunden bei 130°C
4 Stunden bei 140°C

Das erhaltene Perlpolymerisat wurde mit destilliertem Wasser gründlich gewaschen und bei 80°C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 4 zusammengefaßt.

Tabelle 4

| Beispiel | Kautschuk | E-Modul [N/mm²] | Kerbschlagzähigkeit | | Oberflächenglanz | | Kautschukpartikel- größe $d_{50}$ [μm] |
|---|---|---|---|---|---|---|---|
| | | | 23°C [kJ/m²] | -40°C [kJ/m²] | Bed. 1 [%] | Bed. 2 [%] | |
| 11 | Buna BL 6533 | 2600 | 9,8 | 3,9 | 65 | 40 | 0,8 |
| 12 | Buna BL 6425 | 2600 | 9,6 | 3,7 | 64 | 41 | 0,9 |

Beispiele 13 bis 16

In den folgenden Beispielen wird die kontinuierliche Polymerisation in einer 4-Turm-Kaskade beschrieben.

Die Polymerisationsanlage besteht aus einem 250 l Kautschukbehälter, einem 250 l-Vorratsbehälter sowie vier in Reihe geschalteten Turmreaktoren (l/d = 1100(220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende vier Kautschuklösungen hergestellt:

| Beispiel | | 13 | 14 | 15 | 16 |
|---|---|---|---|---|---|
| Buna BL 6533 | [Gew.Tl.]<br>[kg] | 11,05<br>27,63 | 11,05<br>27,63 | 11,05<br>27,63 | 11,05<br>27,63 |
| Polystyrol (VZ = 74 ml/g) | [Gew.Tl.]<br>[kg] | -<br>- | 3,0<br>7,5 | 5,0<br>12,5 | 7,0<br>17,5 |
| Irganox 1076 | [Gew.Tl.]<br>[kg] | 0,1<br>0,25 | 0,1<br>0,25 | 0,1<br>0,25 | 0,1<br>0,25 |
| Ethylbenzol | [Gew.Tl.]<br>[kg] | 15,0<br>37,5 | 15,0<br>37,5 | 15,0<br>37,5 | 15,0<br>37,5 |
| Styrol | [Gew.Tl.]<br>[kg] | 55,39<br>138,48 | 53,14<br>132,85 | 51,64<br>129,1 | 50,14<br>125,35 |
| Acrylnitril | [Gew.Tl.]<br>[kg] | 18,46<br>46,15 | 17,71<br>44,27 | 17,21<br>43,02 | 16,71<br>41,77 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80 °C durch kontinuierliche Zugabe von tert.-Butylperpivalat gestartet. Es werden folgende tert.-Butyperpivalatmengen benötigt:

| Beispiel | 13 | 14 | 15 | 16 |
|---|---|---|---|---|
| tert.-Butylperpivalat für | | | | |
| Turm 1 [g/h]<br>Turm 2 [g/h] | 1,35<br>3,15 | 0,75<br>3,60 | 0,9<br>3,75 | 0,85<br>3,90 |

Die Reglerdosierung (tert.-Dodecylmercaptan) erfolgt ebenfalls kontinuierlich in die vier Polymerisationstürme:

| Beispiel | 13 | 14 | 15 | 16 |
|---|---|---|---|---|
| tert.-Dodecylmercaptan für | | | | |
| Turm 1 [g/h] | - | - | - | - |
| Turm 2 [g/h] | 16 | 16 | 16 | 16 |
| Turm 3 [g/h] | 50 | 50 | 50 | 50 |
| Turm 4 [g/h] | - | - | - | - |

In den Polymerisationstürmen wurde der Polymerumsatz bis zu folgenden Festoffgehalten gefahren:

EP 0 460 455 B1

| Beispiel | 13 | 14 | 15 | 16 |
|---|---|---|---|---|
| Feststoffgehalt in | | | | |
| Turm 1 [Gew.%] | 15 | 18 | 19 | 20,5 |
| Turm 2 [Gew.%] | 25 | 28 | 30 | 31 |
| Turm 3 [Gew.%] | 45 | 45 | 45 | 45 |
| Turm 4 [Gew.%] | 65 | 65 | 65 | 65 |

Die Rührgeschwindigkeit betrug im ersten Turm 150 UPM, im zweiten 100 UPM, im dritten 50 UPM und im vierten 10 UPM (UPM = Umdrehungen pro Minute). Die Polymerisation erfolgte im dritten und vierten Turmreaktor thermisch bei 130 bzw. 146°C. Nach dem vierten Polymerisationsturm wurde die Polymerschmelze entgast und nach dem Abkühlen granuliert. Der Durchsatz an ABS-Formmasse betrug 11 bis 12 kg/h. Die Produkteigenschaften des erzeugten Lösungs-ABS sind in Tabelle 5 zusammengefaßt.

Tabelle 5

| Beispiel | 13 | 14 | 15 | 16 |
|---|---|---|---|---|
| E-Modul [N/mm$^2$] | 2620 | 2650 | 2580 | 2600 |
| Kerbschlagzähigkeit | | | | |
| bei 23°C [kJ/m$^2$] | 3,9 | 10,8 | 14,7 | 17,9 |
| bei -40°C [kJ/m$^2$] | 2,7 | 4,5 | 4,7 | 5,6 |
| Oberflächenglanz | | | | |
| Bedingung 1 [%] | 70 | 68 | 69 | 68 |
| Bedingung 2 [%] | 46 | 44 | 44 | 43 |
| Kautschukpartikelgröße $d_{50}$ [$\mu$m] | 0,4 | 0,4 | 0,4 | 0,4 |
| Yellownes Index | 9,6 | 9,8 | 9,5 | 9,4 |
| Viskositätszahl der PSAN-Matrix [ml/g] | 75,6 | 76,2 | 77,3 | 79,4 |

Vergleichsversuch 1

Zum Vergleich wurden die Eigenschaften eines in Emulsionspolymerisation hergestellten ABS mit 17 Gew.% Polybutadien herangezogen.

Durch Polymerisation von 62 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 25°C ein Polybutadienlatex hergestellt. Nach Beendigung der Reaktion wird der Polymerisationsautoklav entspannt. Der Umsatz betrug 99 %. Es wurde ein Polybutadienlatex erhalten, dessen mittlere Kautschukpartikelgröße bei 0,1 $\mu$m lag. Der erhaltene Latex wurde durch Zusatz von 25 Teilen einer Emulsion, eines Copolymeren aus 96 Teilen Ethylacrylat und 4 Teilen Methacrylsäureamid mit einem Feststoffgehalt von 10 Gew.-Teilen agglomeriert, wobei ein Polybutadienlatex mit einer mittleren Teilchengröße von 0,3 $\mu$m entstand.

Nach Zusetzen von 40 Teilen Wasser, 0,4 Teilen Na-$C_{14}$-Alkylsulfonat und 0,2 Teilen Kaliumperoxodisulfat wurden 38 Teile einer Mischung aus Styrol und Acrylnitril im Verhältnis 70:30 innerhalb von 4 Stunden zugeführt.

Die Polymerisation erfolgt unter Rühren des Ansatzes bei 75°C. Der Umsatz, bezogen auf Styrol-Acrylnitril, war praktisch quantitativ. Die erhaltene Pfropfkautschukdispersion wurde mittels Calciumchloridlösung gefällt und das abgetrennte Pfropfmischpolymerisat mit destilliertem Wasser gewaschen. Der feuchte Pfropfkautschuk wurde auf einem Zweischneckenextruder unter Entgasung mit Polystyrolacrylnitril (VZ = 80,7 ml/g; AN-Gehalt = 25 Gew.%) so abgemischt, daß das resultierende ABS-Produkt 17 Gew.% Polybutadien enthielt. Die Produkteigenschaften sind wie folgt:

14

Tabelle 6

| E-Modul [N/mm$^2$] | 2650 |
|---|---|
| Kerbschlagzähigkeit | |
| bei 23 °C [kJ/m$^2$]<br>bei -40 °C [kJ/m$^2$] | 11,0<br>4,0 |
| Oberflächenglanz | |
| Bedingung 1 [%]<br>Bedingung 2 [%]<br>Kautschukpartikelgröße $d_{50}$ [$\mu$m]<br>Yellowness Index<br>Viskositätszahl der PSAN-Matrix [ml/g] | 68,0<br>47,0<br>0,3<br>32,8<br>80,7 |

Vergleichsversuch 2

Das kleinteilige Lösungs-ABS (Partikeldurchmesser ≤ 0,5 $\mu$m) wurde gemäß folgender Verfahrensweise hergestellt:

Die Polymerisationsanlage besteht aus einem 250 l Kautschuklösebehälter, einem 250 l Vorratsbehälter sowie vier in Reihe geschalteten 30 l Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

18 kg Kautschuk (Buna HX 500 der Bayer AG mit einer Lösungsviskosität von 90 mPa•s als 5 %ige Lösung in Styrol bei 25°C) werden in 22,5 kg Ethylbenzol, 82,1 kg Styrol und 27,4 kg Acrylnitril unter Rühren innerhalb von 5 Stunden gelöst. Die fertige Kautschuklösung wird in den Vorratsbehälter gepumpt. Aus dem Vorratsbehälter wird die Polymerisationsanlage kontinuierlich mit Kautschuklösung versorgt. Es werden pro Stunde 20 l Kautschuklösung in die Polymerisationsanlage gefördert. In den ersten beiden Polymerisationstürmen wird die Polymerisation bei 80°C durch kontinuierliche Zugabe von tert.-Butylperpivalat bewerkstelligt.

Im ersten Turm wird bis zu einem Feststoffgehalt von 18 Gew.%, im zweiten Turm bis zu einem Feststoffgehalt von 28 Gew.% polymerisiert. Dazu werden in den ersten Turm 2,1 g/h tert.-Butylperpivalat gegeben und in den zweiten Turm 4,2 g/h. Die Rührergeschwindigkeiten betragen in beiden Polymerisationstürmen 150 Umdrehungen pro Minute.

In den beiden nächsten folgenden Reaktionstürmen wird durch thermische Polymerisation die PSAN-Matrix ausgebildet. Im dritten Polymerisationsturm wird bei einer Temperatur von 130°C und einer Rührergeschwindigkeit von 50 Umdrehungen pro Minute ein Feststoffgehalt von 45 Gew.% eingestellt. Im vierten Polymerisationsturm wird durch Polymerisation bei 146°C unter Rühren mit 10 Umdrehungen pro Minute ein Feststoffgehalt von 70 Gew.% erhalten.

Alle vier Polymerisationstürme werden vollständig gefüllt betrieben. Tert.-Dodecylmercaptan wird als Molekulargewichtsregler in einer Menge von jeweils 34 g/h kontinuierlich in den zweiten und dritten Polymerisationsturm dosiert.

Nach dem vierten Polymerisationsturm wird die Polymerschmelze entgast und nach dem Abkühlen granuliert. Der Durchsatz an ABS-Formmasse betrug 14 kg/h.

Die Produkteigenschaften des erzeugten kleinteiligen Lösungs-ABS sind wie folgt:

Tabelle 7

| | |
|---|---|
| E-Modul [N/mm$^2$] | 2200 |
| Kerbschlagzähigkeit | |
| bei 23°C [kJ/m$^2$]<br>bei -40°C [kJ/m$^2$] | 6,0<br>5,0 |
| Oberflächenglanz | |
| Bedingung 1 [%]<br>Bedingung 2 [%]<br>Kautschukpartikelgröße d$_{50}$ [$\mu$m]<br>Yellownes Index<br>Viskositätszahl der PSAN-Matrix [ml/g] | 68,0<br>42,0<br>0,35<br>11,8<br>77,0 |

Beispiele 17 bis 30:

Verwendung von Polycyclohexyl(meth)acrylat als weiteres Polymeres

Beispiele 17 bis 20

Es wurden jeweils 11,5 Gew.-Teile (230 g) Buna BL 6533 (Bayer AG) mit unterschiedlichen Mengen Polycyclohexyl(meth)acrylat (VZ = 56 ml/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:
3 Stunden bei 110°C
3 Stunden bei 130°C
4 Stunden bei 140°C
Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 8 zusammengefaßt:

16

EP 0 460 455 B1

Tabelle 8

| Beispiel | Zugabe an Polycyclohexyl(meth)acrylat [g] | E-Modul [N/mm²] | Kerbschlagzähigkeit 23°C [kJ/m²] | -40°C [kJ/m²] | Oberflächenglanz Bed. 1 [%] | Bed. 2 [%] | Kautschuk-partikel-größe d50 [µm] |
|---|---|---|---|---|---|---|---|
| 17 | – | 2800 | 2,0 | 1,8 | 69 | 43 | 0,2 |
| 18 | 58 | 2770 | 2,4 | 1,8 | 68 | 43 | 0,3 |
| 19 | 116 | 2740 | 2,9 | 1,9 | 68 | 43 | 0,3 |
| 20 | 174 | 2680 | 8,6 | 2,9 | 67 | 41 | 0,4 |

Beispiele 21 bis 24

Es wurden jeweils 11,5 Gew.-Teile (230 g) Buna BL 6425 (Bayer AG) mit unterschiedlichen Mengen Polycyclohexyl(meth)acrylat (VZ = 55 ml/g) in einem Styrol/Acrylnitrilgemisch (75/25 Gew.-Teile) über Nacht gelöst. Nach Aufheizen auf 80 °C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Sinspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110 °C

3 Stunden bei 130 °C

4 Stunden bei 140 °C

Das erhaltene Perlpolymerisat wurde mit destilliertem Wasser gründlich gewaschen und bei 80 °C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 9 zusammengefaßt:

Tabelle 9

| Beispiel | Zugabe an Polycyclo-hexyl(meth)acrylat [g] | E-Modul [N/mm²] | Kerbschlagzähigkeit | | Oberflächenglanz | | Kautschuk-partikel-größe d$_{50}$ [µm] |
|---|---|---|---|---|---|---|---|
| | | | 23°C [kJ/m²] | -40°C [kJ/m²] | Bed. 1 [%] | Bed. 2 [%] | |
| 21 | - | 2800 | 2,7 | 1,7 | 68 | 43 | 0,2 |
| 22 | 58 | 2720 | 2,0 | 1,8 | 69 | 42 | 0,3 |
| 23 | 116 | 2750 | 3,1 | 2,1 | 67 | 42 | 0,3 |
| 24 | 174 | 2670 | 7,8 | 2,7 | 67 | 42 | 0,4 |

Beispiele 25 bis 26

Es wurden jeweils 11,5 Gew.-Teile (230 g) Blockkautschuk (Beispiel 9 Buna BL 6533; Beispiel 10 Buna BL 6425 der Bayer AG) mit jeweils 116 g Polycyclohexyl(meth)acrylat (VZ = 55 ml/g) in 1236 g Styrol und 412 g Acrylnitril über Nacht gelöst. Zu der Lösung wurden 4,0 g tert.-Dodecylmercaptan und 2,0 g Irganox 1076 addiert. Nach Aufheizen auf 80°C wurden 1,34 g tert.-Butylperpivalat zugesetzt, so daß bei konstant gehaltener Reaktionstemperatur ein Polymerumsatz von ca. 12 %/Stunde erzielt wurde. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 Gew.% wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110°C
3 Stunden bei 130°C
4 Stunden bei 140°C

Das erhaltene Perlpolymerisat wurde mit destilliertem Wasser gründlich gewaschen und bei 80°C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 10 zusammengefaßt:

Tabelle 10

| Beispiel | Kautschuk | E-Modul [N/mm²] | Kerbschlagzähigkeit 23°C [kJ/m²] | Kerbschlagzähigkeit -40°C [kJ/m²] | Oberflächenglanz Bed. 1 [%] | Oberflächenglanz Bed. 2 [%] | Kautschuk-partikel-größe $d_{50}$ [$\mu$m] |
|---|---|---|---|---|---|---|---|
| 25 | Buna BL 6533 | 2760 | 3,5 | 1,9 | 69 | 42 | 0,3 |
| 26 | Buna BL 6425 | 2740 | 3,7 | 2,1 | 67 | 43 | 0,3 |

Beispiele 27 bis 30

Es wird die kontinuierliche Polymerisation in einer 4-Turm-Kaskade beschrieben.

Die Polymerisationsanlage besteht aus einem 250 l Kautschukbehälter, einem 250 l Vorratsbehälter sowie vier in Reihe geschalteten Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende vier Kautschuklösungen hergestellt:

Tabelle 11

| Beispiel | | 27 | 28 | 29 | 30 |
|---|---|---|---|---|---|
| Buna BL 6533 | [Gew.-Tl.] | 11,05 | 11,05 | 11,05 | 11,05 |
| | [kg] | 27,63 | 27,63 | 27,63 | 27,63 |
| Polycyclohexylmethacrylat (VZ = 55 ml/g) | [Gew.-Tl.] | - | 3,0 | 5,0 | 7,0 |
| | [kg] | - | 7,5 | 12,5 | 17,5 |
| Irganox 1076 | [Gew.-Tl.] | 0,1 | 0,1 | 0,1 | 0,1 |
| | [kg] | 0,25 | 0,25 | 0,25 | 0,25 |
| Ethylbenzol | [Gew.-Tl.] | 15,0 | 15,0 | 15,0 | 15,0 |
| | [kg] | 37,5 | 37,5 | 37,5 | 37,5 |
| Styrol | [Gew.-Tl.] | 55,39 | 53,14 | 51,64 | 50,19 |
| | [kg] | 138,48 | 132,85 | 129,1 | 125,35 |
| Acrylnitril | [Gew.-Tl.] | 18,46 | 17,71 | 17,21 | 16,71 |
| | [kg] | 46,15 | 44,27 | 43,02 | 41,77 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80°C durch kontinuierliche Zugabe von tert.-Butylperpivalat gestartet. Es werden folgende tert.-Butylperpivalatmengen benötigt:

Tabelle 12

| Beispiel | 27 | 28 | 29 | 30 |
|---|---|---|---|---|
| tert.-Butylperpivalat für | | | | |
| Turm 1 [g/h] | 1,35 | 0,75 | 0,9 | 0,85 |
| Turm 2 [g/h] | 3,15 | 3,60 | 3,75 | 3,90 |

Die Reglerdosierung (tert.-Dodecylmercaptan) erfolgt ebenfalls kontinuierlich in die vier Polymerisationstürme:

Tabelle 13

| Beispiel | 27 | 28 | 29 | 30 |
|---|---|---|---|---|
| tert.-Dodecylmercaptan für | | | | |
| Turm 1 [g/h] | - | - | - | - |
| Turm 2 [g/h] | 16 | 16 | 16 | 16 |
| Turm 3 [g/h] | 50 | 50 | 50 | 50 |
| Turm 4 [g/h] | - | - | - | - |

In den Polymerisationstürmen wurde der Polymerumsatz bis zu folgenden Feststoffgehalten gefahren:

22

Tabelle 14

| Beispiel | 27 | 28 | 29 | 30 |
|---|---|---|---|---|
| Feststoffgehalt in | | | | |
| Turm 1 [Gew.%] | 15 | 18 | 19 | 20,5 |
| Turm 2 [Gew.%] | 25 | 28 | 30 | 31 |
| Turm 3 [Gew.%] | 45 | 45 | 45 | 45 |
| Turm 4 [Gew.%] | 65 | 65 | 65 | 65 |

Die Rührgeschwindigkeiten betrugen im ersten Turm 150 Upm, im zweiten 100 Upm, im dritten 50 Upm und im vierten 10 Upm (Upm = Umdrehungen pro Minute). Die Polymerisation erfolgte im dritten und vierten Turmreaktor thermisch bei 130 bzw. 146°C. Nach dem vierten Polymerisationsturm wurde die Polymerschmelze entgast und nach dem Abkühlen granuliert. Der Durchsatz an ABS-Formmasse betrug 11 bis 12 kg/h. Die Produkteigenschaften des erzeugten Lösungs-ABS sind in Tabelle 15 zusammengefaßt:

Tabelle 15

| Beispiel | 27 | 28 | 29 | 30 | |
|---|---|---|---|---|---|
| E-Modul [N/mm$^2$] | 2620 | 2600 | 2550 | 2600 | |
| Kerbschlagzähigkeit | | | | | |
| bei 23°C [kJ/m$^2$] | 3,9 | 6,4 | 8,3 | 9,8 | |
| bei -40°C [kJ/m$^2$] | 2,7 | 3,2 | 3,4 | 4,5 | |
| Oberflächenglanz | | | | | |
| Bedingung 1 [%] | 70 | 70 | 69 | 68 | |
| Bedingung 2 | 46 | 44 | 43 | 43 | |
| Kautschukpartikelgröße $d_{50}$ [$\mu$m] | | 0,4 | 0,4 | 0,4 | 0,4 |
| Yellowness Index | 9,6 | 8,2 | 9,3 | 9,7 | |
| Viskositätszahl der PSAN-Matrix [ml/g] | 75,6 | 76,1 | 77,1 | 78,4 | |

Beispiele 31 bis 42

Verwendung von Mischungen aus Polystyrol und Polycyclohexyl(meth)acrylat als weiteres Polymeres

Beispiele 31 bis 36

Es wurden jeweils 11,5 Gew.-Teile (230 g) Buna BL 6533 (Bayer AG; 40 Gew.% gebundenes Polystyrol, 30 Gew.% Blockpolystyrol) mit unterschiedlichen Mengen Polystyrol (VZ = 74 ml/g) und Polycyclohexyl(meth)acrylat (VZ = 55 ml/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110°C
3 Stunden bei 130°C
4 Stunden bei 140°C

Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 16 zusammengefaßt:

Tabelle 16

| Beispiel | Zugabe an Polystyrol [g] | Zugabe an Polycyclo-hexyl(meth)acrylat [g] | E-Modul [N/mm²] | Kerbschlagzähigkeit 23°C [kJ/m²] | Kerbschlagzähigkeit -40°C [kJ/m²] | Oberflächenglanz Bed. 1 [%] | Oberflächenglanz Bed. 2 [%] | Kautschuk-partikel-größe $d_{50}$ [µm] |
|---|---|---|---|---|---|---|---|---|
| 31 | - | - | 2800 | 2,0 | 1,8 | 69 | 43 | 0,2 |
| 32 | 116 | - | 2760 | 8,6 | 3,6 | 68 | 43 | 0,4 |
| 33 | - | 116 | 2750 | 2,9 | 1,9 | 68 | 43 | 0,3 |
| 34 | 29 | 87 | 2700 | 3,4 | 1,9 | 68 | 44 | 0,4 |
| 35 | 58 | 58 | 2720 | 4,9 | 2,8 | 68 | 43 | 0,4 |
| 36 | 87 | 29 | 2750 | 6,8 | 3,4 | 68 | 44 | 0,4 |

Beispiele 37 bis 42

In den folgenden Beispielen wird die kontinuierliche Polymerisation in einer 4-Turm-Kaskade beschrieben.

Die Polymerisationsanlage besteht aus einem 250 l Kautschukbehälter, einem 250 l Vorratsbehälter sowie vier in Reihe geschalteten Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende sechs Kautschuklösungen hergestellt:

Tabelle 17

| Beispiel | | 37 | 38 | 39 | 40 | 41 | 42 |
|---|---|---|---|---|---|---|---|
| Buna BL 6533 | [Gew.-Tl.] | 11,05 | 11,05 | 11,05 | 11,05 | 11,05 | 11,05 |
| | [kg] | 27,63 | 27,63 | 27,63 | 27,63 | 27,63 | 27,63 |
| Polystyrol (VZ = 74 ml/g) | [Gew.-Tl.] | 5,0 | - | 1,0 | 2,0 | 3,0 | 4,0 |
| | [kg] | 12,5 | - | 2,5 | 5,0 | 7,5 | 10,0 |
| Polycyclohexylmethacrylat (VZ = 55 ml/g) | [Gew.-Tl.] | - | 5,0 | 4,0 | 3,0 | 2,0 | 1,0 |
| | [kg] | - | 12,5 | 10,0 | 7,5 | 5,0 | 2,5 |
| Irganox 1076 | [Gew.-Tl.] | 0,1 | 0,1 | 0,1 | 0,1 | 0,1 | 0,1 |
| | [kg] | 0,25 | 0,25 | 0,25 | 0,25 | 0,25 | 0,25 |
| Ethylbenzol | [Gew.-Tl.] | 15 | 15 | 15 | 15 | 15 | 15 |
| | [kg] | 37,5 | 37,5 | 37,5 | 37,5 | 37,5 | 37,5 |
| Styrol | [Gew.-Tl.] | 51,64 | 51,64 | 51,64 | 51,64 | 51,64 | 51,64 |
| | [kg] | 129,1 | 129,1 | 129,1 | 129,1 | 129,1 | 129,1 |
| Acrylnitril | [Gew.-Tl.] | 17,21 | 17,21 | 17,21 | 17,21 | 17,21 | 17,21 |
| | [kg] | 43,0 | 43,0 | 43,0 | 43,0 | 43,0 | 43,0 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80°C durch kontinuierliche Zugabe von tert.-Butylperpivalat gestartet. Es werden folgende tert.-Butylperpivalatmengen benötigt:

0,9 g/h für den Turm 1

3,8 g/h für den Turm 2

Die Reglerdosierung (tert.-Dodecylmercaptan) erfolgt ebenfalls kontinuierlich in die vier Polymerisationstürme:

16 g/h in den Turm 2

50 g/h in den Turm 3

In den Polymerisationstürmen wurde jeweils bis zu folgendem Feststoffgehalt umgesetzt:

19 Gew.% im Turm 1

30 Gew.% im Turm 2

45 Gew.% im Turm 3

65 Gew.% im Turm 4

Die Rührgeschwindigkeiten betrugen im ersten Turm 150 Upm, im zweiten 100 Upm, im dritten 50 Upm und im vierten 10 Upm (Upm = Umdrehungen pro Minute). Die Polymerisation erfolgte im dritten und vierten Turmreaktor thermisch bei 130 bzw. 146°C. Nach dem vierten Polymerisationsturm wurde die Polymerschmelze entgast und nach dem Abkühlen granuliert. Der Durchsatz an ABS-Formmasse betrug 11 bis 12 kg/h. Die Produkteigenschaften des erzeugten Lösungs-ABS sind in Tabelle 18 zusammengefaßt:

EP 0 460 455 B1

Tabelle 18

| Beispiel | 37 | 38 | 39 | 40 | 41 | 42 |
|---|---|---|---|---|---|---|
| E-Modul [N/mm$^2$] | 2580 | 2550 | 2550 | 2500 | 2540 | 2550 |
| Kerbschlagzähigkeit | | | | | | |
| bei 23°C [kJ/m$^2$] | 14,7 | 8,3 | 9,1 | 9,3 | 10,4 | 12,1 |
| bei -40°C [kJ/m$^2$] | 4,7 | 3,4 | 3,4 | 3,6 | 4,1 | 4,3 |
| Oberflächenglanz | | | | | | |
| Bedingung 1 [%] | 69 | 69 | 69 | 69 | 68 | 68 |
| Bedingung 2 [%] | 44 | 43 | 43 | 44 | 44 | 44 |
| Kautschukpartikelgröße d$_{50}$ [µm] | 0,4 | 0,4 | 0,4 | 0,4 | 0,4 | 0,4 |
| Yellowness Index | 9,5 | 9,3 | 9,3 | 9,6 | 9,3 | 9,2 |
| Viskositätszahl der PSAN-Matrix [ml/g] | 77,3 | 77,1 | 78,5 | 77,9 | 78,2 | 77,9 |

Beispiele 43 bis 58:

Verwendung von Polyphenylenether als weiteres Polymeres

Beispiele 43 bis 46

Es wurden jeweils 11,5 Gew.-Teile (230 g) Buna BL 6533 (Bayer AG) mit unterschiedlichen Mengen Poly-2,6-dimethyl-1,4-phenylenether (Grenzviskosität 0,53 dl/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:
3 Stunden bei 110°C
3 Stunden bei 130°C
4 Stunden bei 140°C
Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 19 zusammengefaßt:

26

Tabelle 19

| Beispiel | Zugabe an Poly-2,6-dimethyl-1,4-phenylenether [g] | E-Modul [N/mm²] | Vicat B [°C] | Kerbschlagzähigkeit | | Oberflächenglanz | | Kautschuk-partikel-größe $d_{50}$ [µm] |
|---|---|---|---|---|---|---|---|---|
| | | | | 23°C [kJ/m²] | -40°C [kJ/m²] | Bed. 1 [%] | Bed. 2 [%] | |
| 43 | – | 2800 | 98,2 | 2,0 | 1,8 | 69 | 43 | 0,2 |
| 44 | 58 | 2850 | 99,3 | 3,0 | 1,9 | 68 | 43 | 0,3 |
| 45 | 116 | 2900 | 101,4 | 7,3 | 3,6 | 68 | 44 | 0,4 |
| 46 | 174 | 2900 | 102,3 | 8,0 | 4,2 | 67 | 42 | 0,4 |

Beispiele 47 bis 50

Es wurden jeweils 11,5 Gew.-Teile (230 g) Buna BL 6425 (Bayer AG) mit unterschiedlichen Mengen Poly-2,6-dimethyl-1,4-phenylenether (Grenzviskosität 0,53 dl/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110°C

3 Stunden bei 130°C

4 Stunden bei 140°C

Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 20 zusammengefaßt:

Tabelle 20

| Beispiel | Zugabe an Poly-phenylenether [g] | E-Modul [N/mm²] | Vicat B [°C] | Kerbschlagzähigkeit 23°C [kJ/m²] | Kerbschlagzähigkeit -40°C [kJ/m²] | Oberflächenglanz Bed. 1 [%] | Oberflächenglanz Bed. 2 [%] | Kautschukpartikelgröße $d_{50}$ [µm] |
|---|---|---|---|---|---|---|---|---|
| 47 | – | 2800 | 98,4 | 2,7 | 1,7 | 68 | 43 | 0,2 |
| 48 | 58 | 2850 | 99,3 | 3,1 | 2,2 | 68 | 42 | 0,3 |
| 49 | 116 | 2870 | 101,1 | 7,2 | 3,4 | 69 | 44 | 0,4 |
| 50 | 174 | 2900 | 101,9 | 7,8 | 4,3 | 67 | 41 | 0,4 |

Beispiele 51 bis 52

Es wurden jeweils 11,5 Gew.-Teile (230 g) Blockkautschuk (Beispiel 9 Buna BL 6533; Beispiel 10 Buna BL 6425 der Bayer AG) mit jeweils 116 g Poly-2,6-dimethyl-1,4-phenylenether (Grenzviskosität 0,53 dl/g) in

29

1236 g Styrol und 412 g Acrylnitril über Nacht gelöst. Zu der Lösung wurden 4,0 g tert.-Dodecylmercaptan und 2,0 g Irganox 1076 addiert. Nach Aufheizen auf 80°C wurden 1,34 g tert.-Butylperpivalat zugesetzt, so daß bei konstant gehaltener Reaktionstemperatur ein Polymerumsatz von ca. 12 %/Stunde erzielt wurde. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110°C
3 Stunden bei 130°C
4 Stunden bei 140°C

Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 21 zusammengefaßt:

Tabelle 21

| Beispiel | Kautschuk | E-Modul [N/mm²] | Vicat B [°C] | Kerbschlagzähigkeit 23°C [kJ/m²] | Kerbschlagzähigkeit -40°C [kJ/m²] | Oberflächenglanz Bed. 1 [%] | Oberflächenglanz Bed. 2 [%] | Kautschuk-partikel-größe $d_{50}$ [µm] |
|---|---|---|---|---|---|---|---|---|
| 51 | Buna BL 6533 | 2850 | 103,1 | 8,6 | 4,2 | 65 | 41 | 0,5 |
| 52 | Buna BL 6425 | 2790 | 102,0 | 8,3 | 4,0 | 63 | 42 | 0,5 |

Beispiele 53 bis 54

Es wurden jeweils 11,5 Gew.-Teile (230 g) Blockkautschuk (Beispiel 11 Buna BL 6533; Beispiel 12 Buna BL 6425 der Bayer AG) mit jeweils 116 g Poly-2,6-dimethyl-1,4-phenylenether (Grenzviskosität 0,53 dl/g) in 1236 g Styrol und 412 g Acrylnitril über Nacht gelöst. Zu der Lösung wurden 4,0 g tert.-Dodecylmercaptan und 2,0 g Irganox 1076 addiert. Danach wurde unter Rühren (200 Upm) thermisch bei 118 ° C polymerisiert, bis ein Feststoffgehalt von 40 % erreicht war. Der Polymersirup wurde danach mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110 ° C

3 Stunden bei 130 ° C

4 Stunden bei 140 ° C

Das erhaltene Perpolymerisat wurde mit destilliertem Wasser gründlich gewaschen und bei 80 ° C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 22 zusammengefaßt:

Tabelle 22

| Beispiel | Kautschuk | E-Modul [N/mm²] | Vicat B [°C] | Kerbschlagzähigkeit | | Oberflächenglanz | | Kautschuk-partikel-größe d$_{50}$ [µm] |
|---|---|---|---|---|---|---|---|---|
| | | | | 23°C [kJ/m²] | -40°C [kJ/m²] | Bed. 1 [%] | Bed. 2 [%] | |
| 53 | Buna BL 6533 | 2850 | 100,7 | 7,9 | 3,7 | 66 | 41 | 0,5 |
| 54 | Buna BL 6425 | 2800 | 101,5 | 8,2 | 3,5 | 67 | 41 | 0,6 |

Beispiele 55 bis 58

In den folgenden Beispielen wird die kontinuierliche Polymerisation in einer 4-Turm-Kaskade beschrieben.

**EP 0 460 455 B1**

Die Polymerisationsanlage besteht aus einem 250 l Kautschukbehälter, einem 250 l Vorratsbehälter sowie vier in Reihe geschalteten Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende vier Kautschuklösungen hergestellt:

Tabelle 23

| Beispiel | | 55 | 56 | 57 | 58 |
|---|---|---|---|---|---|
| Buna BL 6533 | [Gew.-Tl.]<br>[kg] | 11,05<br>27,63 | 11,05<br>27,63 | 11,05<br>27,63 | 11,05<br>27,63 |
| Poly-2,6-dimethyl-1,4-phenylenether (Grenzviskosität 0,53 dl/g) | [Gew.-Tl.]<br><br>[kg] | -<br><br>- | 3,0<br><br>7,5 | 5,0<br><br>12,5 | 7,0<br><br>17,5 |
| Irganox 1076 | [Gew.-Tl.]<br>[kg] | 0,1<br>0,25 | 0,1<br>0,25 | 0,1<br>0,25 | 0,1<br>0,25 |
| Ethylbenzol | [Gew.-Tl.]<br>[kg] | 15,0<br>37,5 | 15,0<br>37,5 | 15,0<br>37,5 | 15,0<br>37,5 |
| Styrol | [Gew.-Tl.]<br>[kg] | 55,39<br>138,40 | 53,14<br>132,85 | 51,64<br>129,1 | 50,19<br>125,35 |
| Acrylnitril | [Gew.-Tl.]<br>[kg] | 18,45<br>46,15 | 17,71<br>44,27 | 17,21<br>43,02 | 16,71<br>41,77 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80°C durch kontinuierliche Zugabe von tert.-Butylperpivalat gestartet. Es werden folgende tert.-Butylperpivalatmengen benötigt:

Tabelle 24

| Beispiel | 55 | 56 | 57 | 58 |
|---|---|---|---|---|
| tert.-Butylperpivalat für | | | | |
| Turm 1 [g/h]<br>Turm 2 [g/h] | 1,4<br>3,2 | 0,9<br>3,7 | 1,1<br>3,8 | 0,9<br>4,1 |

Die Reglerdosierung (tert.-Dodecylmercaptan) erfolgt ebenfalls kontinuierlich in die vier Polymerisationstürme:

Tabelle 25

| Beispiel | 55 | 56 | 57 | 58 |
|---|---|---|---|---|
| tert.-Dodecylmercaptan für | | | | |
| Turm 1 [g/h] | - | - | - | - |
| Turm 2 [g/h] | 16 | 16 | 16 | 16 |
| Turm 3 [g/h] | 50 | 50 | 50 | 50 |
| Turm 4 [g/h] | - | - | - | - |

Beispiele 59 bis 70:

Verwendung von Mischungen aus Polystyrol und Polyphenylenether als weiteres Polymeres

Beispiele 59 bis 64

Es wurden jeweils 11,5 Gew.-Teile (230 g) Buna BL 6533 (Bayer AG; 40 Gew.% gebundenes Polystyrol, 30 Gew.% Blockpolystyrol) mit unterschiedlichen Mengen Polystyrol (VZ = 74 ml/g) und Poly-2,6-dimethyl-1,4-phenylenether (Grenzviskosität 0,53 dl/g) in einem Styrol/Acrylnitrilgemisch (75/25 Gew.-Teile) über Nacht gelöst. Nach Aufheizen auf 80°C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110°C
3 Stunden bei 130°C
4 Stunden bei 140°C

Das erhaltene Perpolymerisat wurde mit destilliertem Wasser gründlich gewaschen und bei 80°C über Nacht im Vakuum getrocknet.

Die Charakterisierung erfolgte an Formkörpern, die aus dem getrockneten Perpolymerisat hergestellt wurden. Die Eigenschaften der hergestellten ABS-Produkte sind in Tabelle 26 zusammengefaßt:

Tabelle 26

| Beispiel | Zugabe an Polystyrol [g] | Zugabe an Polyphenylen-ether [g] | E-Modul [N/mm²] | Kerbschlagzähigkeit | | Oberflächenglanz | | Kautschuk-partikel-größe $d_{50}$ [µm] |
|---|---|---|---|---|---|---|---|---|
| | | | | 23°C [kJ/m²] | -40°C [kJ/m²] | Bed. 1 [%] | Bed. 2 [%] | |
| 59 | – | – | 2800 | 2,0 | 1,8 | 69 | 43 | 0,2 |
| 60 | 116 | – | 2760 | 8,6 | 3,6 | 68 | 43 | 0,4 |
| 61 | – | 116 | 2900 | 7,3 | 3,6 | 68 | 44 | 0,4 |
| 62 | 29 | 87 | 2800 | 7,4 | 3,7 | 67 | 42 | 0,4 |
| 63 | 58 | 58 | 2780 | 7,5 | 3,7 | 66 | 43 | 0,4 |
| 64 | 87 | 29 | 2780 | 8,0 | 3,6 | 68 | 44 | 0,4 |

Beispiele 65 bis 70

In den folgenden Beispielen wird die kontinuierliche Polymerisation in einer 4-Turm-Kaskade beschrieben.

Die Polymerisationsanlage besteht aus einem 250 l Kautschukbehälter, einem 250 l Vorratsbehälter sowie vier in Reihe geschalteten Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende sechs Kautschuklösungen hergestellt:

Tabelle 27

| Beispiel | | 65 | 66 | 67 | 68 | 69 | 70 |
|---|---|---|---|---|---|---|---|
| Buna BL 6533 | [Gew.-Tl.]<br>[kg] | 11,05<br>27,63 | 11,05<br>27,63 | 11,05<br>27,63 | 11,05<br>27,63 | 11,05<br>27,63 | 11,05<br>27,63 |
| Polystyrol (VZ = 74 ml/g) | [Gew.-Tl.]<br>[kg] | 5,0<br>12,5 | -<br>- | 1,0<br>2,5 | 2,0<br>5,0 | 3,0<br>7,5 | 4,0<br>10,0 |
| Poly-2,6-dimethyl-1,4-phenylenether (Grenzv. 0,53 dl/g) | [Gew.-Tl.]<br><br>[kg] | -<br><br>- | 5,0<br><br>12,5 | 4,0<br><br>10,0 | 3,0<br><br>7,5 | 2,0<br><br>5,0 | 1,0<br><br>2,5 |
| Irganox 1076 | [Gew.-Tl.]<br>[kg] | 0,1<br>0,25 | 0,1<br>0,25 | 0,1<br>0,25 | 0,1<br>0,25 | 0,1<br>0,25 | 0,1<br>0,25 |
| Ethylbenzol | [Gew.-Tl.]<br>[kg] | 15<br>37,5 | 15<br>37,5 | 15<br>37,5 | 15<br>37,5 | 15<br>37,5 | 15<br>37,5 |
| Styrol | [Gew.-Tl.]<br>[kg] | 51,64<br>129,1 | 51,64<br>129,1 | 51,64<br>129,1 | 51,64<br>129,1 | 51,64<br>129,1 | 51,64<br>129,1 |
| Acrylnitril | [Gew.-Tl.]<br>[kg] | 17,21<br>43,0 | 17,21<br>43,0 | 17,21<br>43,0 | 17,21<br>43,0 | 17,21<br>43,0 | 17,21<br>43,0 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80 °C durch kontinuierliche Zugabe von tert.-Butylperpivalat gestartet. Es werden folgende tert.-Butylperpivalatmengen benötigt:

0,9 g/h für den Turm 1

3,8 g/h für den Turm 2

Die Reglerdosierung (tert.-Dodecylmercaptan) erfolgt ebenfalls kontinuierlich in die vier Polymerisationstürme:

16 g/h in den Turm 2

50 g/h in den Turm 3

In den Polymerisationstürmen wurde der Polymerumsatz bis zu folgenden Feststoffgehalten gefahren:

19 Gew.% im Turm 1

30 Gew.% im Turm 2

45 Gew.% im Turm 3

65 Gew.% im Turm 4

Die Rührgeschwindigkeiten betrugen im ersten Turm 150 Upm, im zweiten 100 Upm, im dritten 50 Upm und im vierten 10 Upm (Upm = Umdrehungen pro Minute). Die Polymerisation erfolgte im dritten und vierten Turmreaktor thermisch bei 130 bzw. 146 °C. Nach dem vierten Polymerisationsturm wurde die Polymerschmelze entgast und nach dem Abkühlen granuliert. Der Durchsatz an ABS-Formmasse betrug 11 bis 12 kg/h. Die Produkteigenschaften des erzeugten Lösungs-ABS sind in Tabelle 28 zusammengefaßt:

Tabelle 28

| Beispiel | 65 | 66 | 67 | 68 | 69 | 70 |
|---|---|---|---|---|---|---|
| E-Modul [N/mm$^2$] | 2580 | 2720 | 2700 | 2680 | 2650 | 2600 |
| Kerbschlagzähigkeit | | | | | | |
| bei 23 °C [kJ/m$^2$] | 14,7 | 10,0 | 10,5 | 10,7 | 11,3 | 12,1 |
| bei -40 °C [kJ/m$^2$] | 4,7 | 3,9 | 3,9 | 4,0 | 4,0 | 4,1 |
| Oberflächenglanz | | | | | | |
| Bedingung 1 [%] | 69 | 67 | 67 | 68 | 68 | 68 |
| Bedingung 2 [%] | 44 | 42 | 41 | 42 | 42 | 42 |
| Kautschukpartikelgröße d$_{50}$ [μm] | 0,4 | 0,5 | 0,5 | 0,5 | 0,5 | 0,5 |
| Yellowness Index | 9,5 | 12,4 | 12,1 | 11.9 | 11,5 | 10,5 |

Beispiele 71 bis 100:

Es wurden jeweils die in Tabelle 29 angegebenen Mengen Styrol-Butadienblockcopolymerisat (Buna BL 6533, Bayer AG) gemeinsam mit den angegebenen Mengen Polybutadien (Buna HX 500, Bayer AG) und den in den Ansprüchen genannten Polymeren in 1648 g eines Styrol-Acrylnitrilgemischs (75/25 Gew.-Teile) über Nacht gelöst.

Nach Aufheizen auf 80 °C wurde jeweils 0,04 Gew.-Teile tert.-Butylperpivalat zugesetzt, so daß bei konstant gehaltener Reaktionstemperatur ein Polymerumsatz von ca. 10 bis 12 %/Stunde erzielt wurde. Bei 20 % Umsatz wurden zu jedem Versuch 0,2 Gew.-Teile tert.-Dodecylmercaptan als Molekulargewichtsregler und 0,12 Gew.-Teile Irganox 1076 als Kautschukstabilisator nachdosiert. Die Rührgeschwindigkeit des Ankerrührers war in dem 6 l-Stahlautoklaven auf 200 Umdrehungen pro Minute eingestellt. Nach dem Erreichen eines Feststoffgehaltes von 40 % wurde das Polymerisat mit 0,1 % Dicumylperoxid versetzt und in einer wäßrigen Lösung von 1,8 g Na-Phosphat, 18 g eines Suspensionshilfsmittels auf Basis Ethylenoxid (Luviskol K 90 der BASF AG) und 50 g Ertivinol in 1800 g Wasser unter Rühren (300 Upm) dispergiert. Ein vollständiger Umsatz war durch Polymerisation mit folgendem Temperaturprogramm gewährleistet:

3 Stunden bei 110 °C

3 Stunden bei 130 °C

4 Stunden bei 140 °C

Das erhaltene Perpolymerisat wurde mit destilliertem Wasser gründlich gewaschen und bei 80 °C über Nacht im Vakuum getrocknet.

Die Charakterisierung erfolgte an Formkörpern, die aus dem getrockneten Perlpolymerisat hergestellt wurden. Die Eigenschaften der hergestellten ABS-Produkte sind in Tabelle 29 zusammengefaßt:

Tabelle 29

| Bsp. | Buna BL 6533 [g] | Buna HX 500 [g] | Polystyrol (vz=74 ml/g) [g] | Polyphenylen-ether (0,53 dl/g) [g] | Polycyclo-hexylmeth-acrylat (vz=55 ml/g) [g] | E-Modul [N/mm²] | Kerbschlag-zähigkeit 23°C [kJ/m²] | Kerbschlag-zähigkeit -40°C [kJ/m²] | Oberflächen-glanz Bed.1 [%] | Oberflächen-glanz Bed.2 [%] | Kautschuk-partikel-größe $d_{50}$ [µm] |
|---|---|---|---|---|---|---|---|---|---|---|---|
| 71 | 230 | - | 116 | - | - | 2760 | 8,6 | 3,6 | 68 | 43 | 0,4 |
| 72 | 184 | 46 | 116 | - | - | 2700 | 8,9 | 4,5 | 67 | 42 | 0,4 |
| 73 | 138 | 92 | 116 | - | - | 2600 | 10,5 | 6,8 | 67 | 40 | 0,5 |
| 74 | 230 | - | - | 116 | - | 2900 | 7,3 | 3,6 | 68 | 44 | 0,4 |
| 75 | 184 | 46 | - | 116 | - | 2800 | 7,5 | 4,5 | 67 | 43 | 0,4 |
| 76 | 138 | 92 | - | 116 | - | 2720 | 7,8 | 5,3 | 66 | 42 | 0,4 |
| 77 | 230 | - | - | - | 116 | 2750 | 2,9 | 1,9 | 68 | 43 | 0,3 |
| 78 | 184 | 46 | - | - | 116 | 2680 | 3,1 | 2,9 | 67 | 42 | 0,3 |
| 79 | 138 | 92 | - | - | 116 | 2640 | 4,0 | 3,6 | 68 | 41 | 0,4 |
| 80 | 230 | - | 58 | 58 | - | 2780 | 7,5 | 3,6 | 66 | 43 | 0,4 |
| 81 | 184 | 46 | 58 | 58 | - | 2750 | 7,8 | 4,2 | 67 | 42 | 0,4 |
| 82 | 138 | 92 | 58 | 58 | - | 2700 | 9,4 | 5,8 | 65 | 42 | 0,4 |
| 83 | 230 | - | 58 | - | 58 | 2720 | 4,9 | 2,8 | 68 | 43 | 0,4 |
| 84 | 184 | 46 | 58 | - | 58 | 2680 | 7,3 | 3,2 | 67 | 40 | 0,4 |
| 85 | 138 | 92 | 58 | - | 58 | 2620 | 8,2 | 4,8 | 66 | 41 | 0,4 |

Beispiele 86 bis 100

In den folgenden Beispielen wird die kontinuierliche Polymerisation in einer 4-Turm-Kaskade beschrieben.

39

Die Polymerisationsanlage besteht aus einem 250 l Kautschukbehälter, einem 250 l Vorratsbehälter sowie vier in Reihe geschalteten Turmreaktoren (l/d = 1100/220 mm) mit innenliegenden horizontal geführten parallelen Schichten von Kühlrohren und einem zwischen die Kühlrohrschichten greifenden Rührer und einer an die Polymerisationstürme anschließenden Entgasungs- und Granuliereinrichtung.

Für die Polymerisation wurden folgende vier Kautschuklösungen hergestellt:

In 129,1 kg Styrol, 43,01 kg Acrylnitril und 37,5 kg Ethylbenzol wurden unter Rühren 0,25 kg Irganox 1076 und die in Tabelle 30 angegebenen Mengen der verschiedenen Kautschuke und Polymere gelöst.

Tabelle 30

| Bsp. | Buna BL 6533 [kg] | Buna HX 500 [g] | Polystyrol (VZ = 74 - ml/g) [kg] | Polyphenylenether (0,53 dl/g) [kg] | Polycyclohexylmethacrylat (VZ = 55 ml/g) [kg] |
|---|---|---|---|---|---|
| 86 | 27,63 | - | 12,5 | - | - |
| 87 | 22,10 | 5,33 | 12,5 | - | - |
| 88 | 19,34 | 8,29 | 12,5 | - | - |
| 89 | 27,63 | - | - | 12,5 | - |
| 90 | 22,10 | 5,53 | - | 12,5 | - |
| 91 | 19,34 | 8,29 | - | 12,5 | - |
| 92 | 27,63 | - | - | - | 12,5 |
| 93 | 22,10 | 5,53 | - | - | 12,5 |
| 94 | 19,34 | 8,29 | - | - | 12,5 |
| 95 | 27,63 | - | 6,25 | 6,25 | - |
| 96 | 22,10 | 5,53 | 6,25 | 6,25 | - |
| 97 | 19,34 | 8,29 | 6,25 | 6,25 | - |
| 98 | 27,63 | - | 6,25 | - | 6,25 |
| 99 | 22,10 | 5,53 | 6,25 | - | 6,25 |
| 100 | 19,34 | 8,29 | 6,25 | - | 6,25 |

Die fertige Kautschuklösung wird in den Vorratsbehälter gepumpt. Aus dem Vorratsbehälter wird die Polymerisationsanlage kontinuierlich mit 20 l/h Kautschuklösung versorgt.

In den beiden ersten Polymerisationstürmen wird die Polymerisation bei 80°C durch kontinuierliche Zugabe von tert.-Butylperpivalat gestartet. Es werden folgende tert.-Butylperpivalatmengen benötigt:

Turm 1 0,9 g/h

Turm 2 3,8 g/h

Die Reglerdosierung (tert.-Dodecylmercaptan) erfolgt ebenfalls kontinuierlich in die vier Polymerisationstürme:

Turm 1 16 g/h

Turm 2 -

Turm 3 50 g/h

Turm 4 -

In den Polymerisationstürmen wurde der Polymerumsatz bis zu folgenden Feststoffgehalten gefahren:

19 Gew.% im Turm 1

30 Gew.% im Turm 2

45 Gew.% im Turm 3

65 Gew.% im Turm 4

Die Rührgeschwindigkeiten betrugen im ersten Turm 150 Upm, im zweiten 100 Upm, im dritten 50 Upm und im vierten 10 Upm (Upm = Umdrehungen pro Minute). Die Polymerisation erfolgte im dritten und vierten Turmreaktor thermisch bei 130 bzw. 146°C. Nach dem vierten Polymerisationsturm wurde die Polymerschmelze entgast und nach dem Abkühlen granuliert. Der Durchsatz an ABS-Formmasse betrug 11 bis 12 kg/h. Die Produkteigenschaften des erzeugten Lösungs-ABS sind in Tabelle 31 zusammengefaßt:

Die folgenden Beispiele (101 bis 131) befassen sich mit der Zumischung von gewöhnlichem Lösungs-ABS zu den erfindungsgemäßen Formmassen. Dieses gewöhnliche Lösungs-ABS wird jeweils als Komponente A bezeichnet und die erfindungsgemäße Formmassen mit Komponente B. Die Komponenten A und B wurden als Granulat im angegebenen Gewichtsverhältnis miteinander gemischt und gemeinsam im Extruder bei 280 °C aufgeschmolzen, vermischt und als abgemischtes Produkt granuliert.

Tabelle 31

| Beispiel | E-Modul [N/mm²] | Vicat B [°C] | Kerbschlagzähigkeit 23°C [kJ/m²] | -40°C [kJ/m²] | Oberflächenglanz Bed. 1 [%] | Bed. 2 [%] | Yellowness-Index | Kautschuk-partikel-größe $d_{50}$ [µm] |
|---|---|---|---|---|---|---|---|---|
| 86 | 2580 | 100,5 | 14,7 | 4,7 | 69 | 44 | 9,5 | 0,4 |
| 87 | 2520 | 100,3 | 14,9 | 6,2 | 68 | 43 | 9,8 | 0,4 |
| 88 | 2470 | 99,9 | 15,2 | 8,7 | 67 | 43 | 9,8 | 0,4 |
| 89 | 2720 | 102,1 | 10,0 | 3,9 | 67 | 42 | 12,4 | 0,5 |
| 90 | 2640 | 102,0 | 10,8 | 4,7 | 66 | 42 | 12,5 | 0,5 |
| 91 | 2620 | 101,4 | 10,9 | 5,3 | 66 | 42 | 12,7 | 0,5 |
| 92 | 2550 | 100,5 | 8,3 | 3,4 | 69 | 43 | 9,3 | 0,4 |
| 93 | 2500 | 100,2 | 8,8 | 4,8 | 67 | 42 | 9,5 | 0,4 |
| 94 | 2430 | 99,8 | 9,2 | 5,8 | 66 | 41 | 9,2 | 0,5 |
| 95 | 2660 | 101,2 | 10,8 | 4,0 | 68 | 42 | 11,5 | 0,5 |
| 96 | 2600 | 100,8 | 11,2 | 5,3 | 67 | 41 | 11,4 | 0,5 |
| 97 | 2560 | 100,5 | 11,8 | 7,7 | 67 | 42 | 11,9 | 0,5 |
| 98 | 2500 | 101,4 | 9,8 | 3,8 | 69 | 44 | 9,6 | 0,4 |
| 99 | 2430 | 101,2 | 9,9 | 5,2 | 67 | 41 | 9,2 | 0,4 |
| 100 | 2400 | 100,9 | 10,4 | 6,1 | 66 | 42 | 9,8 | 0,5 |

Beispiele 101 bis 106:

Als Komponente A wurde ein Lösungs-ABS mit folgenden Eigenschaften eingesetzt:

| | |
|---|---|
| Kautschukpartikelgröße $d_{50}$ | 4,0 $\mu$m |
| Kautschukgehalt (Buna HX 529 C) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B eine erfindungsgemäße Formmasse eingesetzt, die nach der Vorschrift der Beispiele 13 - 16 hergestellt war:

| | |
|---|---|
| Kautschukpartikelgröße $d_{50}$ | 0,4 $\mu$m |
| Blockkautschukgehalt (Buna BL 6533/Bayer AG) | 17,0 Gew.-% |
| Zusätzlich addiertes Polystyrol | 10,7 Gew.-% |
| Viskositätszahl des addierten Polystyrols | 74,0 ml/g |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |
| Oberflächenglanz (Bedingung 1) | 68,0 % |
| Oberflächenglanz (Bedingung 2) | 43,0 % |

Beispiele 101 bis 106:

| Bsp. | Komponente A [Gew.-Tl.] | Komponente B [Gew.-Tl.] | Kerbschlagzähigkeit | | E-Modul [N/mm$^2$] | Oberflächenglanz | |
|---|---|---|---|---|---|---|---|
| | | | 23 °C [kJ/m$^2$] | -40 °C [kJ/m$^2$] | | Bed. 1 [%] | Bed. 2 [%] |
| 101 | 100 | - | 17,7 | 12,5 | 1750 | 49 | 17 |
| 102 | - | 100 | 17,9 | 5,6 | 2600 | 68 | 43 |
| 103 | 5 | 95 | 18,7 | 6,5 | 2560 | 67 | 43 |
| 104 | 10 | 90 | 19,5 | 8,1 | 2500 | 67 | 41 |
| 105 | 20 | 80 | 19,4 | 8,9 | 2410 | 65 | 42 |
| 106 | 30 | 70 | 19,3 | 9,6 | 2350 | 61 | 38 |

Beispiele 107 bis 111:

Als Komponente A wurde ein Lösungs-ABS mit folgenden Eigenschaften eingesetzt:

| | |
|---|---|
| Kautschukpartikelgröße $d_{50}$ | 4,0 $\mu$m |
| Kautschukgehalt (Buna HX 529 C/Bayer AG) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B wurde eine erfindungsgemäße Formmasse eingesetzt, die nach der Vorschrift des Beispiels 58 produziert worden war:

42

| Kautschukpartikelgröße $d_{50}$ | 0,5 $\mu$m |
|---|---|
| Blockkautschukgehalt (Buna BL 6533/Bayer AG) | 17,0 Gew.-% |
| zusätzlich addiertes Polystyrol | 10,7 Gew.-% |
| Grenzviskositätszahl des addierten Polystyrols | 0,53 dl/g |
| Viskositätszahl der PSAN-Matrix | 78,9 ml/g |
| Styrolgehalt der PSAN-Matrix | 75,0 Gew.-% |
| Acrylnitrilgehalt der PSAN-Matrix | 25,0 Gew.-% |

Beispiele 107 bis 111:

| Bsp. | Komponente A [Gew.-Tl.] | Komponente B [Gew.-Tl.] | Kerbschlagzähigkeit | | E-Modul [N/mm²] | Oberflächenglanz | |
|---|---|---|---|---|---|---|---|
| | | | 23°C [kJ/m²] | -40°C [kJ/m²] | | Bed. 1 [%] | Bed. 2 [%] |
| 101 | 100 | - | 17,7 | 12,5 | 1750 | 49 | 17 |
| 107 | - | 100 | 11,2 | 4,1 | 2800 | 65 | 41 |
| 108 | 5 | 95 | 13,4 | 5,8 | 2630 | 64 | 40 |
| 109 | 10 | 90 | 14,6 | 6,3 | 2570 | 63 | 40 |
| 110 | 20 | 80 | 14,6 | 7,4 | 2490 | 59 | 37 |
| 111 | 30 | 70 | 14,8 | 8,2 | 2350 | 54 | 32 |

Beispiele 112 bis 116:

Als Komponente A wurde ein Lösungs-ABS mit folgenden Eigenschaften eingesetzt:

| Kautschukpartikelgröße $d_{50}$ | 4,0 $\mu$m |
|---|---|
| Kautschukgehalt (Buna HX 529 C/Bayer AG) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B wurde eine erfindungsgemäße Formmasse eingesetzt, die nach der Vorschrift des Beispiels 30 produziert worden war:

| Kautschukpartikelgröße $d_{50}$ | 0,4 $\mu$m |
|---|---|
| Blockkautschukgehalt (Buna BL 6533/Bayer AG) | 17,0 Gew.-% |
| zusätzlich addiertes Polycyclohexylmethacrylat | 10,7 Gew.-% |
| Viskositätszahl des Polycyclohexylmethacrylats | 55,0 ml/g |
| Viskositätszahl der PSAN-Matrix | 78,4 ml/g |
| Styrolgehalt der PSAN-Matrix | 75,0 Gew.-% |
| Acrylnitrilgehalt der PSAN-Matrix | 25,0 Gew.-% |

Beispiele 112 - 116:

| Bsp. | Komponente A [Gew.-Tl.] | Komponente B [Gew.-Tl.] | Kerbschlagzähigkeit | | E-Modul [N/mm$^2$] | Oberflächenglanz | |
|---|---|---|---|---|---|---|---|
| | | | 23°C [kJ/m$^2$] | -40°C [kJ/m$^2$] | | Bed. 1 [%] | Bed. 2 [%] |
| 101 | 100 | - | 17,7 | 12,5 | 1750 | 49 | 17 |
| 112 | - | 100 | 9,8 | 4,5 | 2600 | 68 | 43 |
| 113 | 5 | 95 | 11,2 | 5,1 | 2520 | 67 | 42 |
| 114 | 10 | 90 | 12,9 | 6,0 | 2480 | 67 | 41 |
| 115 | 20 | 80 | 13,4 | 7,1 | 2390 | 65 | 40 |
| 116 | 30 | 70 | 14,0 | 7,9 | 2360 | 61 | 37 |

Beispiele 117 - 121:

Als Komponente A wurde ein Lösungs-ABS mit folgenden Eigenschaften eingesetzt:

| | |
|---|---|
| Kautschukpartikelgröße $d_{50}$ | 4,0 $\mu$m |
| Kautschukgehalt (Buna HX 529 C/Bayer AG) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B wurde eine erfindungsgemäße Formmasse eingesetzt, die nach der Vorschrift des Hauptpatents Beispiels 70 hergestellt worden war:

| | |
|---|---|
| Kautschukpartikelgröße $d_{50}$ | 0,5 $\mu$m |
| Blockkautschukgehalt (Buna BL 6533/Bayer AG) | 17,0 Gew.-% |
| zusätzlich addiertes Polystyrol | 6,2 Gew.-% |
| Viskositätszahl des Polystyrols | 74,0 ml/g |
| zusätzlich addierter Polyphenylenether | 1,5 Gew.-% |
| Grenzviskosität des Polyphenylenethers | 0,53 dl/g |
| Viskositätszahl der PSAN-Matrix | 77,4 ml/g |
| Styrolgehalt der PSAN-Matrix | 75,0 Gew.-% |
| Acrylnitrilgehalt der PSAN-Matrix | 25,0 Gew.-% |

Beispiele 117 - 121:

| Bsp. | Komponente A [Gew.-Tl.] | Komponente B [Gew.-Tl.] | Kerbschlagzähigkeit | | E-Modul [N/mm$^2$] | Oberflächenglanz | |
|---|---|---|---|---|---|---|---|
| | | | 23°C [kJ/m$^2$] | -40°C [kJ/m$^2$] | | Bed. 1 [%] | Bed. 2 [%] |
| 101 | 100 | - | 17,7 | 12,5 | 1750 | 49 | 17 |
| 117 | - | 100 | 12,1 | 4,1 | 2600 | 68 | 42 |
| 118 | 5 | 95 | 12,9 | 5,0 | 2540 | 67 | 41 |
| 119 | 10 | 90 | 13,4 | 5,6 | 2500 | 66 | 40 |
| 120 | 20 | 80 | 13,4 | 6,1 | 2470 | 65 | 38 |
| 121 | 30 | 70 | 14,1 | 7,6 | 2430 | 60 | 36 |

EP 0 460 455 B1

Beispiele 122 bis 126:

Als Komponente A wurde ein Lösungs-ABS mit folgenden Eigenschaften eingesetzt:

| | |
|---|---|
| Kautschukpartikelgröße $d_{50}$ | 4,0 $\mu$m |
| Kautschukgehalt (Buna HX 529 C/Bayer AG) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B wurde eine erfindungsgemäße Formmasse eingesetzt, die nach der Vorschrift des Beispiels 42 hergestellt worden war:

| | |
|---|---|
| Kautschukpartikelgröße $d_{50}$ | 0,4 $\mu$m |
| Blockkautschukgehalt (Buna BL 6533/Bayer AG) | 17,0 Gew.-% |
| zusätzlich addiertes Polystyrol | 6,2 Gew.-% |
| Viskositätszahl des Polystyrols | 74,0 ml/g |
| zusätzlich addiertes Polycyclohexylmethacrylat | 1,5 Gew.-% |
| Viskositätszahl des Polycyclohexylmethacrylats | 55,0 ml/g |
| Viskositätszahl der PSAN-Matrix | 77,4 ml/g |
| Styrolgehalt der PSAN-Matrix | 75,0 Gew.-% |
| Acrylnitrilgehalt der PSAN-Matrix | 25,0 Gew.-% |

Beispiele 122 bis 126:

| Bsp. | Komponente A [Gew.-Tl.] | Komponente B [Gew.-Tl.] | Kerbschlagzähigkeit | | E-Modul [N/mm$^2$] | Oberflächenglanz | |
|---|---|---|---|---|---|---|---|
| | | | 23 °C [kJ/m$^2$] | -40 °C [kJ/m$^2$] | | Bed. 1 [%] | Bed. 2 [%] |
| 101 | 100 | - | 17,7 | 12,5 | 1750 | 49 | 17 |
| 122 | - | 100 | 12,1 | 4,3 | 2550 | 68 | 44 |
| 123 | 5 | 95 | 12,7 | 5,2 | 2500 | 67 | 42 |
| 124 | 10 | 90 | 13,3 | 5,7 | 2460 | 66 | 40 |
| 125 | 20 | 80 | 13,4 | 6,4 | 2410 | 66 | 39 |
| 126 | 30 | 70 | 13,9 | 7,8 | 2380 | 60 | 36 |

Beispiele 127 bis 131:

Als Komponente A wurde ein Lösungs-ABS mit folgenden Eigenschaften eingesetzt:

| | |
|---|---|
| Kautschukpartikelgröße $d_{50}$ | 4,0 $\mu$m |
| Kautschukgehalt (Buna HX 529 C/Bayer AG) | 17,0 Gew.-% |
| Viskositätszahl der PSAN-Matrix | 79,4 ml/g |
| Styrolgehalt der PSAN-Matrix | 75,0 Gew.-% |
| Acrylnitrilgehalt der PSAN-Matrix | 25,0 Gew.-% |

Als Komponente B wurde eine erfindungsgemäße Formmasse eingesetzt, die nach der Vorschrift des Beispiels 87 hergestellt worden war:

45

| Kautschukpartikelgröße $d_{50}$ | 0,4 $\mu$m |
|---|---|
| Blockkautschukgehalt (Buna BL 6533/Bayer AG) | 16,0 Gew.-% |
| Homopolybutadien (Buna HX 500/Bayer AG) | 3,9 Gew.-% |
| Zusätzlich addiertes Polystyrol | 9,0 Gew.-% |
| Viskositätszahl des Polystyrols | 74,0 ml/g |
| Viskositätszahl der PSAN-Matrix | 77,4 ml/g |
| Styrolgehalt der PSAN-Matrix | 75,0 Gew.-% |
| Acrylnitrilgehalt der PSAN-Matrix | 25,0 Gew.-% |

Beispiele 127 - 131:

| Bsp. | Komponente A [Gew.-Tl.] | Komponente B [Gew.-Tl.] | Kerbschlagzähigkeit | | E-Modul [N/mm$^2$] | Oberflächenglanz | |
|---|---|---|---|---|---|---|---|
| | | | 23°C [kJ/m$^2$] | -40°C [kJ/m$^2$] | | Bed. 1 [%] | Bed. 2 [%] |
| 101 | 100 | - | 17,7 | 12,5 | 1750 | 49 | 17 |
| 127 | - | 100 | 14,9 | 6,2 | 2520 | 68 | 43 |
| 128 | 5 | 95 | 16,8 | 7,2 | 2490 | 67 | 42 |
| 129 | 10 | 90 | 17,1 | 7,8 | 2430 | 67 | 40 |
| 130 | 20 | 80 | 17,0 | 8,5 | 2380 | 65 | 38 |
| 131 | 30 | 70 | 17,2 | 9,3 | 2340 | 60 | 32 |

## Patentansprüche

1. Kautschukmodifizierte schlagzähe Acrylnitril/Butadien/Styrol-(ABS-)-Formmasse,wie sie erhalten wird durch Polymerisation von Styrol und Acrylnitril in Gegenwart eines vorgebildeten Kautschuks, gelöst in monomerem Styrol und Acrylnitril sowie gegebenenfalls einem Lösungsmittel, dadurch gekennzeichnet, daß sie als Kautschuk ein Styrol-Butadien-Blockcopolymerund ferner mindestens ein weiteres Polymer enthält, das mit Styrol-Butadien-Blockkautschuk bzw. dessen Polystyrol-Anteil verträglich und mit Polystyrolacrylnitril unverträglich ist.

2. Formmasse nach Anspruch 1, enthaltend neben einem Styrol-Butadien-Blockkautschuk einen Polybutadienkautschuk.

3. Formmasse nach Anspruch 1 oder 2, enthaltend als weiteres Polymer ein Polymer ausgewählt aus der Gruppe die umfaßt Polystyrol, Polycyclohexyl(meth)acrylat, Polyphenylenether und deren Mischungen.

4. Formmasse nach Anspruch 3, enthaltend zusätzlich mindestens ein weiteres Polymer, das mit Styrol-Butadien-Blockkautschuk bzw. dessen Polystyrol-Anteil verträglich und mit Polystyrolacrylnitril unverträglich ist.

5. Verfahren zur Herstellung der Formmassen nach Anspruch 1, dadurch gekennzeichnet, daß man in an sich bekannter Weise Styrol und Acrylnitril in einem Reaktionsgemisch radikalisch polymerisiert, das außer Styrol, Acrylnitril, einem Initiator und gegebenenfalls einem Lösungsmittel als Kautschuk einen Styrol-Butadien-Blockkautschuk sowie mindestens ein weiteres Polymer enthält, das mit Styrol-Butadien-Blockkautschuk bzw. dessen Polystyrol-Anteil verträglich und mit Polystyrolacrylnitril unverträglich ist.

## Claims

1. A rubber-modified, impact-resistant acrylonitrile-butadiene-styrene (ABS) molding material, as obtained by polymerizing styrene and acrylonitrile in the presence of a preformed rubber, dissolved in monomeric styrene and acrylonitrile and, if necessary, a solvent, wherein the rubber is a styrene-butadiene block copolymer and in addition at least one further polymer which is compatible with the styrene-butadiene block rubber or its polystyrene component and is incompatible with polystyrene-acrylonitrile.

2. A molding material as claimed in claim 1, containing a polybutadiene rubber in addition to a styrene-butadiene block rubber.

3. A molding material as claimed in claim 1 or 2, containing a further polymer selected from the group comprising polystyrene, polycyclohexyl (meth)acrylate, polyphenylene ether and mixtures thereof.

4. A molding material as claimed in claim 3, additionally containing at least one further polymer which is compatible with styrene-butadiene block rubber or the polystyrene component thereof and is incompatible with polystyrene-acrylonitrile.

5. A process for the preparation of a molding material as claimed in claim 1, which comprises subjecting styrene and acrylonitrile to conventional free-radical polymerization in a reaction mixture containing, as the rubber, a styrene-butadiene block rubber and at least one further polymer in addition to styrene, acrylonitrile, an initiator and, if necessary, a solvent, the further polymer being compatible with the styrene-butadiene block rubber or the polystyrene component thereof and being incompatible with polystyrene-acrylonitrile.

**Revendications**

1. Masse de moulage à base d'acrylonitrile / butadiène / styrène (ABS) modifiée par du caoutchouc et résistant aux chocs, telle qu'elle est obtenue par polymérisation de styrène et d'acrylonitrile en présence d'un caoutchouc préparé, en solution dans du styrène et de l'acrylonitrile monomériques, de même que, le cas échéant, un solvant, caractérisé en ce qu'elle contient conune caoutchouc un copolymère séquencé styrène-butadiène et d'autre part au moins un polymère supplémentaire qui est compatible avec le caoutchouc séquencé styrène-butadiène, respectivement avec sa fraction polystyrène, et qui est incompatible avec le polystyrène-acrylonitrile.

2. Masse de moulage selon la revendication 1, comprenant, outre un caoutchouc séquencé styrène-butadiène, un caoutchouc polybutadiène.

3. Masse de moulage selon la revendication 1 ou 2, comprenant comme polymère supplémentaire un polymère choisi dans le groupe qui englobe le polystyrène, le polycyclohexyl(méth)acrylate l'éther de polyphénylène et leurs mélanges.

4. Masse de moulage selon la revendication 3, comprenant en plus au moins un polymère supplémentaire, qui est compatible avec le caoutchouc séquencé styrène-butadiène, respectivement avec sa fraction polystyrène, et qui est incompatible avec le polystyrène-acrylonitrile.

5. Procédé pour la préparation des masses de moulage selon la revendication 1, caractérisé en ce qu'on n'effectue une polymérisation radicalaire, d'une manière connue en soi, de styrène et d'acrylonitrile dans un mélange réactionnel, qui contient, outre le styrène, l'acrylonitrile, un initiateur et, le cas échéant un solvant, comme caoutchouc un caoutchouc séquencé styrène-butadiène de même qu'au moins un polymère supplémentaire qui est compatible avec le caoutchouc séquencé styrène-butadiène, respectivement avec sa fraction polystyrène, et qui est incompatible avec le polystyrène-acrylonitrile.